# EUROPÄISCHE PATENTANMELDUNG

(11) **EP 4 764 281 A1**
(43) Veröffentlichungstag der Anmeldung: **24.06.2026**
(21) Anmeldenummer: 25225896.7
(22) Anmeldetag: 19.12.2025
(51) Int. Cl.: F16L 13/14

(54) **AXIALPRESSFITTING MIT VEREINFACHT HERGESTELLTER AUSSENHÜLSE**

(30) Priorität: 20.12.2024 EP 24222510
(71) Anmelder: TECE SE, 48282 Emsdetten (DE)
(72) Erfinder: Fitz, Waldemar, 48268 Greven (DE); Smit, Frank, 48432 Rheine (DE)
(74) Vertreter: Lippert Stachow Patentanwälte Rechtsanwälte

(57) **Zusammenfassung**

Axialpressfitting (100) umfassend einen Rohrstutzen (1), eine Innenhülse (3) und eine Außenhülse (2), wobei insbesondere die Außenhülse (2) und/oder der Rohrstutzen (1) aus Metall hergestellt sind, wobei in einer Ausgangsanordnung die Innenhülse (3) radial innerhalb der Außenhülse (2) angeordnet ist und der Rohrstutzen (1) radial innerhalb der Innenhülse (3) angeordnet ist und zwischen Rohrstutzen (1) und Innenhülse (3) ein Aufnahmeraum zur Aufnahme des Leitungsrohrs (5) angeordnet ist, wobei ausgehend von der Ausgangsanordnung die Außenhülse (2) in einer axialen Verschieberichtung relativ zu der Innenhülse (3) verschiebbar ist, wobei die Außenhülse (2) zumindest teilweise aus einem Blech hergestellt ist, insbesondere mittels Tiefziehens, und/oder mittels Bearbeitung eines Rohrs hergestellt ist, und/oder insbesondere die Außenhülse (4) mehrere Teile aufweist, insbesondere einen ersten Teil aus Metall und einen zweiten Teil aus Kunststoff.

## Beschreibung

Die Erfindung betrifft ein Axialpressfitting zum abdichtenden Verbinden mit einem Leitungsrohr eines Rohrleitungssystems gemäß dem Oberbegriff von Anspruch 1 sowie ein Set umfassend ein solches Axialpressfitting und ein Leitungsrohr sowie ein Verfahren zum abdichtenden Verbinden eines Axialpressfittings mit einem Leitungsrohr.

Im Stand der Technik sind unterschiedlichste Ansätze zur Realisierung einer abdichtenden Verbindung zwischen einem Leitungsrohr und einem Rohrstutzen bekannt. Dabei gibt es zwei gegensätzliche Ansätze, eine solche abdichtende Verbindung zu realisieren, nämlich einerseits das Vorsehen von Radialpressfittings und andererseits das Vorsehen von Axialpressfittings. Beiden Ansätzen ist lediglich gemeinsam, dass zur Realisierung einer abdichtenden Verbindung das Leitungsrohr gegen den Rohrstutzen gepresst wird. Bei Radialpressfittings wird hierzu das Leitungsrohr zwischen dem in dem Leitungsrohr angeordneten Rohrstutzen und einer um das Leitungsrohr umlaufenden Radialpresshülse angeordnet, wonach anschließend mit einem radialen Presswerkzeug eine radiale Presskraft auf die Radialpresshülse ausgeübt wird, wodurch diese dauerhaft verformt wird und hierdurch ein dauerhafter radialer Anpressdruck zwischen Leitungsrohr und Rohrstutzen bereitgestellt wird. Bei einem Axialpressfitting wird eine Außenhülse um das Leitungsrohr angeordnet, wobei sich der Rohrstutzen innerhalb des Leitungsrohrs befindet, wonach die Außenhülse axial relativ zum Rohrstutzen und relativ zum Leitungsrohr verschoben wird und aufgrund von schräg zur axialen und radialen Richtung verlaufenden Schrägflächen mittels des axialen Verschiebens der Außenhülse ein radialer Anpressdruck zwischen Rohrstutzen und Leitungsrohr erzeugt wird. Axialpressfittings und Radialpressfittings beruhen somit auf unterschiedlichen Prinzipien und existieren seit Jahrzehnten nebeneinander, wobei Axial- und Radialpressfittings für jeweils unterschiedliche Anwendungsfälle besonders geeignet sind und sich andere Anforderungen an die Bestandteile von Axial- bzw. Radialpressfittings stellen.

Die vorliegende Erfindung betrifft die Gattung der Axialpressfittings. Im Stand der Technik sind unterschiedlichste Ansätze zur Realisierung von Axialpressfittings bekannt. Bei einer bekannten Variante umfasst das Axialpressfitting einen Rohrstutzen und eine Schiebehülse. Eine abdichtende Verbindung zwischen dem Axialpressfitting und einem Leitungsrohr wird dadurch hergestellt, dass in einem ersten Arbeitsschritt das Leitungsrohr an einem Ende abgelängt wird, wonach die Schiebehülse über dieses Ende auf das Leitungsrohr aufgeschoben wird. Anschließend wird das Ende aufgeweitet, wozu ein spezielles Aufweitungswerkzeug erforderlich ist, das speziell auf das Axialpressfitting und das Leitungsrohr abgestimmt ist. In einem darauffolgenden Arbeitsschritt wird das Leitungsrohr mit seinem aufgeweiteten Ende auf den Rohrstutzen aufgeschoben. In einem darauffolgenden Arbeitsschritt wird die Schiebehülse über das aufgeweitete Rohrende, das auf dem Rohrstutzen aufgeschoben ist, aufgeschoben, wozu eine erhebliche axiale Presskraft erforderlich ist, die zwischen der Schieberhülse und dem Rohrstutzen aufgebracht werden muss, da die Schiebehülse direkt an dem Rohr anliegt und das Rohr unmittelbar gegen den Rohrstutzen presst, wodurch eine abdichtende Verbindung zwischen dem Leitungsrohr und dem Rohrstutzen hergestellt wird. Bei dieser im Stand der Technik bekannten Variante werden sehr hohe Anforderungen an die Verbiegbarkeit des Leitungsrohres gestellt, und zumeist ist ein elastisches Rückstellverhalten des Leitungsrohres zwingend erforderlich, damit eine abdichtende Verbindung hergestellt und dauerhaft sichergestellt werden kann. Bei dieser Variante können somit beispielsweise metallisch beschichtete Rohre nicht eingesetzt werden, und die Auswahl an chemischen Bestandteilen der Rohre ist wegen der hohen Anforderungen an deren physikalisches Verhalten begrenzt, was die Herstellung von für die Führung von Leitungswasser geeigneten Leitungsrohren, auf die sich die vorliegende Erfindung besonders bezieht, stark erschwert.

Bei einer anderen in dem Stand der Technik bekannten Variante, die für die vorliegende Erfindung gattungsbildend ist, umfasst das Axialpressfitting einen Rohrstutzen und eine Doppelhülsenanordnung mit einer Innenhülse und einer Außenhülse. Bei dieser Variante wird die abdichtende Verbindung zwischen dem Rohrstutzen und einem Leitungsrohr dadurch hergestellt, dass in einem ersten Arbeitsschritt das, insbesondere abgelängte, Leitungsrohr auf den Rohrstutzen aufgeschoben wird, ohne zuvor aufgeweitet worden zu sein, und die Doppelhülsenanordnung außen an dem Leitungsrohr vorgesehen wird. Beispielsweise kann zunächst zumindest ein Teil der Doppelhülsenanordnung, beispielsweise die Außenhülse, auf das Leitungsrohr aufgeschoben werden und sodann das Leitungsrohr und die Doppelhülsenanordnung auf den Rohrstutzen aufgeschoben werden und insbesondere ein anderer Teil der Doppelhülsenanordnung, beispielsweise die Innenhülse, zunächst an dem Rohrstutzen fixiert, beispielsweise auf diesen aufgeschoben werden, wonach das Leitungsrohr auf den Rohrstutzen aufgeschoben wird, während der andere Teil an dem Rohrstutzen fixiert ist, wobei hierbei beispielsweise das Leitungsrohr in einen zwischen Innenhülse und Rohrstutzen ausgebildeten Aufnahmeraum eingeschoben und dabei auf den Rohrstutzen aufgeschoben werden. Beispielsweise kann zunächst die Doppelhülsenanordnung an dem Rohrstutzen befestigt, insbesondere auf den Rohrstutzen aufgeschoben, werden und sodann das Leitungsrohr in einen zwischen Innenhülse und Rohrstutzen ausgebildeten Aufnahmeraum eingeschoben und dabei auf den Rohrstutzen aufgeschoben werden. In einem nachfolgenden Arbeitsschritt wird die Außenhülse axial zur Innenhülse und insbesondere zum Rohrstutzen verschoben. Dabei wird die Innenhülse aufgrund der axialen Verschiebung der Außenhülse relativ zur Innenhülse radial verquetscht und bewirkt dabei eine radiale Presskraft zum Rohrstutzen hin, da sie an ihrem Außenumfang von der Außenhülse umschlossen ist. Durch diese radiale Presskraft wird das Leitungsrohr gegen den Rohrstutzen gepresst zum Bereitstellen einer abdichtenden Verbindung zwischen Rohrstutzen und Leitungsrohr.

Gattungsgemäße Axialpressfittings bieten im Vergleich zu der zuvor beschriebenen Variante den erheblichen Vorteil, dass kein spezielles Aufweitungswerkzeug erforderlich ist, sondern das Leitungsrohr, ohne vorher aufgeweitet worden zu sein, auf den Rohrstutzen aufgeschoben werden kann, wonach dann die Verpressung zwischen Rohrstutzen und Leitungsrohr durch das Verquetschen der Innenhülse erfolgt. Außerdem kann ein solches gattungsgemäßes Axialpressfitting vom Grundprinzip her bei Leitungsrohren eingesetzt werden, die weniger hohen elastischen bzw. Biegbarkeits-Anforderungen genügen als bei der oben beschrieben alternativen Variante. Allerdings hat sich die Realisierung gattungsgemäßer Axialpressfittings im Stand der Technik als problematisch herausgestellt. Denn an die verschiedenen Bauteile (Rohrstutzen, Innenhülse und Außenhülse) werden sehr hohe Anforderungen gestellt, damit mit einem gattungsgemäßen Axialpressfitting eine dauerhafte, abgedichtete Verbindung zwischen dem Rohrstutzen des Axialpressfittings und einem Leitungsrohr sichergestellt sein kann. Dabei ist zu berücksichtigen, dass ein Axialpressfitting zumeist in Rohrleitungssystemen zum Einsatz kommt, wie beispielsweise Heizwasser-, Trinkwasser- oder Gasleitungssystemen, bei denen ein zuverlässige und langlebige fehlerfrei Funktion, und damit eine zuverlässige und langlebige abgedichtete Verbindung zwischen dem Axialpressfitting und einem Leitungsrohr des Rohrleitungssystems von großer Bedeutung ist.

Zum einen muss die Außenhülse dazu ausgebildet sein, sehr hohe axiale Kräfte auszuhalten, die bei dem Verschieben der Außenhülse relativ zur Innenhülse auftreten, und für das Aufbringen einer axialen Kraft zum Durchführen der Verschiebung geeignet sein. Zum anderen muss die Außenhülse dazu ausgebildet sein, sehr hohen radialen Presskräften dauerhaft standzuhalten, da die Außenhülse die Innenhülse umfänglich begrenzen muss, damit bei dem axialen Verschieben von Außenhülse und Innenhülse zueinander eine radiale Verpressung der Innenhülse gegen den Rohrstutzen erreicht werden kann. Außerdem muss ein gattungsgemäßes Axialpressfitting so ausgebildet sein, dass auch bei wechselnden Temperaturen eines in einem Leitungsrohr geführten Fluids und somit bei wechselnden Temperaturen des Leitungsrohrs und des Axialpressfittings stets eine abgedichtete Verbindung zwischen Rohrstutzen und Leitungsrohr gewährleistet ist. Da in Abhängigkeit von der Temperatur ein Leitungsrohr, das üblicherweise zumindest überwiegend aus Kunststoff hergestellt ist, unterschiedliche Ausdehnungen einnimmt, muss das Axialpressfitting so ausgebildet sein, dass bei jedem in einem Rohrleitungssystem denkbaren Ausdehnungsverhalten des Leitungsrohres stets eine abgedichtete Verbindung zwischen Rohrstutzen und Leitungsrohr gewährleistet bleibt. Außerdem muss die Innenhülse gezielt so ausgebildet sein, dass sie sich bei einer axialen Verschiebung der Innenhülse relativ zur Außenhülse leicht radial verpressen lässt zum Gewährleisten der radialen Presskraft zwischen Außenhülse und Rohrstutzen, mit der das Leitungsrohr gegen den Rohrstutzen gepresst wird. Außerdem soll das Axialpressfitting bevorzugt aus solchen Bestandteilen hergestellt sein, die sich kostengünstig und einfach herstellen lassen und eine besondere Langlebigkeit aufweisen. Außerdem soll der Rohrstutzen bevorzugt auch aus einem solchen Material gefertigt sein, mit dem eine Anschlussseite ausgebildet werden kann, mit der er an einen Anschluss, wie beispielsweise einen Zulauf- oder einen Ablauf-Anschluss (z. B. Wasser oder Gas), oder an ein weiteres Leitungsrohr angeschlossen werden kann. Eine solche Anschlussseite ist häufig als Gewinde ausgebildet, so dass das Material des Rohrstutzens bevorzugt eine so hohe Festigkeit aufweisen soll, dass mit ihm ein Gewinde realisierbar ist, oder alternativ als zu einem weiteren Axialpressfitting korrespondierende Anschlussseite ausgebildet, so dass der Rohrstutzen einer hohen Kraftbelastung ausgesetzt ist.

Gattungsgemäße Axialpressfittings werden den an sie gestellten Anforderungen nur unzureichend gerecht. Beispielsweise sind Axialpressfittings bekannt, bei denen der Rohrstutzen und die Außenhülse aus einem Metall hergestellt sind. Da der aus Metall hergestellte Rohrstutzen kein thermisches Dehnungsverhalten wie ein aus Kunststoff hergestelltes Leitungsrohr aufweist, kommt es sehr leicht zu Undichtigkeiten bei Temperaturvariationen in dem Leitungsrohr, da bei solchen Temperaturvariationen keine fortdauernd ausreichende Presskraft zwischen Rohrstutzen und Leitungsrohr sichergestellt sein kann. Bekannte Ansätze, diesem Problem zu begegnen, sind beispielsweise die Verwendung hochelastischer und damit sehr schwer herzustellender Leitungsrohre oder der Einsatz komplex aufgebauter, elastischer Innenhülsen und komplex aufgebauter Außenhülsen, wobei es sich als schwierig herausgestellt hat, hierdurch eine dauerhafte, auch bei Temperaturschwankungen zuverlässig abdichtende Verbindung zwischen Rohrstutzen und Leitungsrohr zu gewährleisten. Im Stand der Technik sind ferner Axialpressfittings bekannt, bei denen dem Problem dadurch begegnet wird, dass der Rohrstutzen aus unterschiedlichen einzelnen Elementen hergestellt und anschließend die Elemente miteinander verbunden werden. Die verschiedenen Lösungsansätze, mit denen im Stand der Technik versucht wird, dem erläuterten Problem zu begegnen, sind jedoch kostspielig zu realisieren und/oder bringen Schwierigkeiten bei der Realisierung einer abdichtenden Verbindung zwischen Leitungsrohr und Rohrstutzen mit sich und/oder können eine dauerhaft abdichtende Verbindung zwischen Leitungsrohr und Rohrstutzen nur unzureichend bereitstellen.

Der vorliegenden Erfindung liegt die Aufgabe zugrunde, ein Axialpressfitting bzw. ein Set bzw. ein Verfahren bereitzustellen, mit dem zumindest ein Nachteil gattungsgemäßer Axialpressfittings bzw. Sets bzw. Verfahren zumindest teilweise behoben wird.

Als eine Lösung der der vorliegenden Erfindung zugrunde liegenden Aufgabe schlägt die Erfindung ein Axialpressfitting mit den Merkmalen gemäß Anspruch 1 vor. Das Axialpressfitting dient dem Zweck, abgedichtet mit einem Leitungsrohr eines Rohrleitungssystems verbunden zu werden. Das Axialpressfitting weist als Bestandteile einen Rohrstutzen, eine Innenhülse und eine Außenhülse auf, die sich jeweils entlang einer Achse axial erstrecken. In der nachfolgend erläuterten Ausgangsanordnung und in der nachfolgend erläuterten Montageanordnung der Bestandteile des Axialpressfittings sowie in dem nachfolgend erläuterten Installationszustand des Axialpressfittings, in dem das Axialpressfitting mit dem Leitungsrohr abdichtend verbunden ist, fallen die Achsen der Bestandteile des Axialpressfittings zusammen. Allgemein bevorzugt ist die Außenhülse zumindest teilweise, insbesondere vollständig aus Metall hergestellt, beispielsweise aus einem Metall oder einer Metalllegierung. Allgemein bevorzugt ist der Rohrstutzen aus Metall hergestellt, beispielsweise aus einem Metall oder einer Metalllegierung. Allgemein bevorzugt sind Außenhülse und Rohrstutzen aus einem unterschiedlichen Material hergestellt. Allgemein bevorzugt ist die Innenhülse aus Kunststoff hergestellt. In einer Ausgangsanordnung der Bestandteile des Axialpressfittings zueinander ist die Innenhülse radial innerhalb der Außenhülse angeordnet und ist der Rohrstutzen radial innerhalb der Innenhülse angeordnet, wobei zwischen Rohrstutzen und Innenhülse ein Aufnahmeraum zur Aufnahme des Leitungsrohres ausgebildet bzw. angeordnet ist. Das Leitungsrohr ist zur Realisierung einer abdichtenden Verbindung mit dem Axialpressfitting den Rohrstutzen aufnehmend in den Aufnahmeraum axial einführbar oder bereits bei Realisierung des Aufnahmeraums in diesem angeordnet, beispielsweise indem zur Realisierung der Ausgangsanordnung und somit des Aufnahmeraums zunächst die Innenhülse am Rohrstutzen angeordnet, anschließend das Leitungsrohr auf die Innenhülse aufgeschoben und anschließend die Außenhülse unter Realisierung der Ausgangsanordnung und dabei auch des Aufnahmeraums, in dem das Leitungsrohr angeordnet ist, das Leitungsrohr entlang bewegt wird, bis sie sich in der Position befindet, die sie in der Ausgangsanordnung relativ zu Rohrstutzen und Innenhülse innehat. Der Aufnahmeraum ist somit zu einem axialen Ende des Axialpressfittings hin in der Ausgangsanordnung offen, sodass das Leitungsrohr von diesem axialen Ende aus in den Aufnahmeraum eingeführt werden kann oder sich bei Anordnung in dem Aufnahmeraum durch die Öffnung hindurch axial aus diesem hinaus erstreckt. Ausgehend von der Ausgangsanordnung ist die Außenhülse in einer axialen Verschieberichtung relativ zu der Innenhülse verschiebbar bis zum Erreichen einer Montageanordnung der Bestandteile des Axialpressfittings, wobei das Verschieben der Außenhülse relativ zur Innenhülse eine Verformung der Innenhülse zum Verkleinern einer radialen Erstreckung von zumindest einem axialen Abschnitt des Aufnahmeraums mit sich bringt, wodurch eine radiale Verpressung eines Leitungsrohrs gewährleistet ist, das wie erläutert zuvor in den Aufnahmeraum eingeführt worden ist bzw. in dem Aufnahmeraum angeordnet gewesen ist, während die Bestandteile des Axialpressfittings in der Ausgangsanordnung zueinander angeordnet waren. Allgemein sei darauf hingewiesen, dass die Innenhülse in der Ausgangsanordnung und in der Montageanordnung jeweils zumindest mit einem axialen Erstreckungsbereich radial innerhalb der Außenhülse angeordnet ist, der sich insbesondere über mindestens 50%, insbesondere mindestens 70 %, insbesondere mindestens 80 %, insbesondere mindestens 90 %, insbesondere 100 % ihrer axialen Gesamterstreckungslänge erstreckt, und der Rohrstutzen über mindestens 50%, insbesondere mindestens 70 %, insbesondere mindestens 80 %, insbesondere mindestens 90 %, insbesondere 100 % des axialen Erstreckungsbereichs der Innenhülse hinweg radial innerhalb der Innenhülse angeordnet ist.

Gemäß einer erfindungsgemäßen Lösung ist die Außenhülse zumindest teilweise aus einem Blech oder aus einem Rohr, insbesondere aus einem Metallblech bzw. Metallrohr, hergestellt, insbesondere mittels Tiefziehens oder mittels Bearbeitung, insbesondere mechanischer Bearbeitung, eines Rohrs. Gemäß einer weiteren erfindungsgemäßen Lösung weist das Axialpressfitting als weiteren Bestandteil zumindest einen Dichtring auf, der in der Ausgangsanordnung und in der Montageanordnung der Bestandteile des Axialpressfittings zueinander zwischen der Innenhülse und dem Rohrstutzen vorgesehen ist. Gemäß einer weiteren erfindungsgemäßen Lösung weist die Außenhülse eine Wandstärke auf, die über zumindest 80 % ihrer Längserstreckungslänge hinweg um weniger als 20 % variiert. Gemäß einer weiteren erfindungsgemäßen Lösung ist ein Set umfassend ein Axialpressfitting und ein Leitungsrohr bereitgestellt, wobei in einem Installationszustand des Sets die Bestandteile des Axialpressfittings in der Montageanordnung angeordnet sind und das Leitungsrohr radial zwischen Rohrstutzen und Innenhülse verpresst ist, wobei das Leitungsrohr beschichtet ist und/oder ohne vorherige Aufweitung radial mit dem Axialpressfitting verpresst ist. Gemäß einer weiteren erfindungsgemäßen Lösung wird ein Verfahren bereitgestellt, gemäß dem das Leitungsrohr in dem erläuterten Aufnahmeraum angeordnet wird, insbesondere in diesen axial eingeführt wird, insbesondere ohne zuvor aufgeweitet worden zu sein, wobei das Leitungsrohr abdichtend radial relativ zu dem Rohrstutzen verpresst wird, insbesondere radial gegen einen Dichtring gepresst wird, der zwischen der Innenhülse und dem Rohrstutzen vorgesehen ist. Die verschiedenen erfindungsgemäßen Lösungen werden nachfolgend unter Beschreibung von vorteilhaften Ausführungsformen der jeweiligen Lösung erläutert. Die verschiedenen erfindungsgemäßen Lösungen können in Ausführungsformen jeweils Merkmale aufweisen, die im Zusammenhang mit Ausführungsformen von einer jeweils anderen Lösung vorliegend beschrieben sind und/oder in Ausführungsformen Merkmale aufweisen, die vorliegend im Zusammenhang mit aus dem Stand der Technik bekannten, insbesondere gattungsgemäßen, Axialpressfittings erläutert sind.

Gemäß einer erfindungsgemäßen Lösung ist die Außenhülse zumindest teilweise, insbesondere vollständig, aus einem Blech, insbesondere Metallblech, und/oder mittels Bearbeitung eines Rohrs, insbesondere Metallrohrs, hergestellt. Allgemein bevorzugt ist die Außenhülse zumindest teilweise, insbesondere vollständig, mittels Tiefziehens aus einem Blech, insbesondere aus einem Metallblech, hergestellt. Der Tiefziehprozess ist ein für den Fachmann allgemein bekannter Herstellprozess. Für den Fachmann allgemein bekannt wird bei dem Tiefziehprozess üblicherweise ein Blech tiefgezogen, sodass aus dem Blech eine dreidimensionale, becherartige Form erzeugt wird. Zur Herstellung von zumindest einem Teil der Außenhülse mittels Tiefziehens wird der Boden der becherartigen Form entfernt oder zumindest abschnittsweise ausgeschnitten, wodurch eine Hülsenform bereitgestellt ist. Durch die Herstellung von zumindest einem Teil der Außenhülse mittels Tiefziehens kann eine im Wesentlichen konstante Wandstärke der Außenhülse auf einfache Weise bereitgestellt werden und/oder kann die Außenhülse besonders kostengünstig realisiert werden. Durch die Herstellung von zumindest einem Teil der Außenhülse mittels Bearbeitung eines Rohrs kann eine im Wesentlichen konstante Wandstärke der Außenhülse auf einfache Weise bereitgestellt werden und/oder kann die Außenhülse besonders kostengünstig realisiert werden. Die Bearbeitung eines Rohrs ist insbesondere eine mechanische Bearbeitung, beispielsweise eine Bearbeitung mittels Umformens und/oder Schneidens, beispielsweise mittels Umformens und/oder Stanzens. Bevorzugt ist das Rohr nach Art eines Hohlzylinders mit konstanter Wandstärke ausgebildet. Ein solches Rohr ist besonders einfach und kostengünstig als Meterware herstellbar. Bevorzugt wird der zumindest eine Teil der Außenhülse aus dem Rohr hergestellt, indem zunächst ein Stück von einem Rohr abgelängt wird und anschließend dieses Stück mechanisch weiterverarbeitet wird, beispielsweise mittels Umformens und/oder Schneidens. Allgemein bevorzugt ist das Rohr ein Metallrohr, beispielsweise aus einem Metall oder aus einer Metalllegierung hergestellt. Beispielsweise kann das Rohr mittels Strangpressens hergestellt sein. Es hat sich überraschend herausgestellt, dass eine mittels Tiefziehens und/oder mittels Bearbeitung eines Rohrs hergestellte Außenhülse für ein gattungsgemäßes Axialpressfitting besonders geeignet ist, da sie nicht nur besonders kostengünstig herstellbar ist, sondern auch darüber hinaus eine hinreichende Robustheit aufweist, sodass sie mit einer hinreichenden axialen Presskraft relativ zur Innenhülse verschiebbar ist und dabei eine hinreichend große und dauerhafte radiale Presskraft zum Erzeugen eines Installationszustands des Axialpressfittings gewährleisten kann. In Abkehr von üblichen Axialpressfittings geht somit die vorliegende Erfindung in vorteilhaften Ausführungsformen den besonderen Weg, dass auf das Realisieren einer Außenhülse mit komplizierten Geometrien, beispielsweise unterschiedlichen Wandstärken, verzichtet wird und stattdessen die Außenhülse mit einfachen mechanischen Mitteln, d.h. mit möglichst einfach und kostengünstig durchführbaren mechanischen Verarbeitungsschritten, aus einem Blech oder Rohr hergestellt wird. Eine für eine zweckmäßige Funktionsweise vorteilhafte Form der Außenhülse kann dabei durch mechanische Bearbeitung des Blechs bzw. Rohrs erreicht werden, wobei insbesondere eine Außenhülse herstellbar ist, die zumindest über einen wesentlichen Anteil ihrer Längserstreckungslänge hinweg, beispielsweise über mindestens 80 %, insbesondere mindestens 90 %, insbesondere über ihre gesamte Längserstreckungslänge hinweg eine zumindest im wesentlichen konstante Wandstärke aufweist, beispielsweise eine solche Wandstärke, die um weniger als 20 %, insbesondere um weniger als 15 %, insbesondere um weniger als 10 %, insbesondere um weniger als 5 %, insbesondere um weniger als 3 %, insbesondere um weniger als 2 %, insbesondere um weniger als 1 % variiert. Die Wandstärke der Außenhülse kann beispielsweise durch eine Blechdicke des mechanisch bearbeiteten Blechs bzw. durch eine Rohrwandstärke des mechanisch bearbeiteten Rohrs, aus dem die Außenhülse zumindest teilweise hergestellt ist, festgelegt sein, so dass die Wandstärke der Außenhülse durch die Blechdicke bzw. die Rohrwandstärke und die mechanische Bearbeitung, durch die eine zumindest abschnittsweise Veränderung der Blechdicke bzw. Rohrwandstärke erfolgt, determiniert ist. Beispielsweise kann die mechanische Bearbeitung ein Realisieren von Sicken, ein Umbördeln bzw. Umfalzen, ein Strecken oder Ähnliches umfassen. Die Wandstärke ist dabei bevorzugt an jeder Stelle der Außenhülse durch die Dicke bzw. Stärke des die jeweilige Stelle der Außenhülse ausbildenden Rohrabschnitts bzw. Blechabschnitts an der jeweiligen Stelle definiert, wobei Versteifungen beispielsweise anstatt einer Vergrößerung der Wandstärke durch eine zweckmäßige Konturierung realisiert sein können, etwa indem bei einer Sicke ein Blechabschnitt mit einer wesentlichen Richtungskomponente radial verläuft oder indem bei einem Falz bzw. einer Umbördelung zwei Blechabschnitte radial versetzt zueinander verlaufen, insbesondere aneinander anliegend über einen selben Abschnitt entlang der Achse verlaufen, so dass ohne Erhöhung der Wandstärke der Außenhülse aufgrund des Verlaufs ihrer Hülsenwand eine stellenweise Versteifung der Außenhülse realisiert ist. Insbesondere sind Außenhülse, Innenhülse, und in Ausführungsformen insbesondere zumindest ein zusätzlich vorgesehener Dichtring, so zueinander korrespondierend ausgebildet, dass mit der mittels Bearbeitung eines Blechs und/oder Bearbeitung eines Rohrs, insbesondere ausschließlich durch Bearbeitung eines Blechs und/oder Bearbeitung eines Rohrs, hergestellten Außenhülse das Axialpressfitting zuverlässig und dauerhaft abdichtend mit einem Leitungsrohr verpresst werden kann. Allgemein kann in Ausführungsformen die Außenhülse mehrteilig ausgebildet sein. Bevorzugt sind die mehreren Teile der Außenhülse positionsfest relativ zueinander fixiert. Beispielsweise kann die Außenhülse einen ersten Teil umfassen, der aus einem Blech oder einem Rohr hergestellt ist, insbesondere aus Metall hergestellt ist, und einen zweiten Teil, der ebenfalls aus einem Blech oder aus einem Rohr hergestellt ist oder auf andere Weise hergestellt ist, beispielsweise mittels Spritzgießverfahrens. Beispielsweise kann die Außenhülse einen ersten Teil aufweisen, der aus Metall hergestellt ist, und einen zweiten Teil, der aus Kunststoff hergestellt ist. Beispielsweise kann die Außenhülse einen ersten Teil aufweisen, der nach Art einer Hülse, insbesondere nach Art eines rohrartigen Teils, ausgebildet ist, und einen zweiten Teil, der die vorliegend zu Ausführungsformen erläuterte Fixieranordnung und/oder Halteanordnung ausbildet. Bevorzugt sind erster und zweiter Teil miteinander verrastet oder verpresst. Bevorzugt ist der erste Teil aus Metall, der zweite Teil aus Kunststoff hergestellt. In einer Ausführungsform besteht die Außenhülse aus einem einzigen Bauteil, dass mittels Bearbeitung eines Blechs oder Rohrs hergestellt wurde.

Gemäß einer erfindungsgemäßen Lösung umfasst das Axialpressfitting zumindest ein Dichtring, der in der Ausgangsanordnung und in der Montageanordnung zwischen der Innenhülse und dem Rohrstutzen angeordnet ist, wobei insbesondere eine axiale Relativposition des Dichtrings zum Rohrstutzen und/oder zur Innenhülse in der Montageanordnung auf einen selben Positionsbereich festgelegt ist wie in der Ausgangsanordnung. Das Vorsehen eines Dichtrings zwischen dem Rohrstutzen und der Innenhülse bringt den besonderen Vorteil mit sich, dass eine besonders zuverlässige Abdichtung gewährleistet sein kann. In einem Installationszustand des Axialpressfittings liegt der Dichtring innerhalb des erläuterten Aufnahmeraums an dem Leitungsrohr an und kann daher eine um die Achse umlaufende Dichtung an einer Innenseite des Leitungsrohrs bereitstellen. Allgemein bevorzugt ist der Dichtring unmittelbar am Rohrstutzen angeordnet. Allgemein bevorzugt ist der Dichtring innerhalb des axialen Abschnitts des Aufnahmeraums angeordnet, dessen radiale Erstreckung sich bei einer Verschiebung der Außenhülse in der axialen Verschieberichtung ausgehend von der Ausgangsanordnung relativ zu der Innenhülse bis zum Erreichen der Montageanordnung unter Verformung der Innenhülse verkleinert, oder unmittelbar axial benachbart zu dem axialen Abschnitt angeordnet. Allgemein bevorzugt stellt der Dichtring eine umlaufende Abdichtung zwischen dem Rohrstutzen und einer Innenseite des Leitungsrohrs im Installationszustand des Axialpressfittings bereit. Allgemein bevorzugt ist der Dichtring in der Ausgangsanordnung und in der Montageanordnung der Bestandteile des Axialpressfittings an dem Rohrstutzen in einer definierten axialen Position gehalten und weist mit seiner Außenseite zur Innenhülse hin. Allgemein bevorzugt hat der Dichtring in der Montageanordnung eine selbe axiale Relativposition zum Rohrstutzen inne wie in der Ausgangsanordnung. Allgemein bevorzugt ist eine axiale Relativposition des Dichtrings zum Rohrstutzen und/oder zur Innenhülse in der Montageanordnung auf einen selben Positionsbereich festgelegt wie in der Ausgangsanordnung. Bevorzugt ist der Dichtring in der Montageanordnung und in der Ausgangsanordnung durch die Festlegung des Positionsbereichs mit einem Spiel von weniger als 300 %, insbesondere weniger als 150 %, insbesondere weniger als 100 %, insbesondere weniger als 80% seiner axialen Erstreckungslänge, die er in einem unverpressten, am Rohrstutzen angeordneten Ruhezustand, etwa in der Ausgangsanordnung, aufweist und die bei der Ausbildung des Dichtrings als O-Ring seiner Schnurstärke entspricht, festgelegt. Die Festlegung des Positionsbereichs kann beispielsweise durch Anordnung des Dichtrings in einer an der radialen Innenseite der Innenhülse oder in einer an der radialen Außenseite des Rohrstutzens vorgesehenen Aufnahme erfolgen, die axial voneinander beabstandete Aufnahmewände aufweist, zwischen denen der Dichtring angeordnet ist und die somit den Positionsbereich festlegen, wobei das Spiel durch den axialen Abstand der Aufnahmewände abzüglich der axialen Erstreckungslänge des Dichtrings gegeben sein kann. Allgemein bevorzugt hat der Dichtring in der Montageanordnung eine andere axiale Relativposition zur Außenhülse inne als in der Ausgangsanordnung. Allgemein bevorzugt ist der Dichtring als ein von dem Rohrstutzen und von der Innenhülse separat hergestellter O-Ring ausgebildet. Allgemein bevorzugt ist der Dichtring aus einem elastischen Material hergestellt. Allgemein bevorzugt ist die Außenhülse aus einem Material hergestellt bzw. ausgebildet, das mindestens so hart wie, insbesondere härter als, ein Material ist, aus dem die Innenhülse hergestellt bzw. ausgebildet ist. Bevorzugt weist das Material, aus dem die Außenhülse hergestellt bzw. ausgebildet ist, ein E-Modul auf, das mindestens so groß ist wie der E-Modul, insbesondere größer ist als der E-Modul, des Materials, aus dem die Innenhülse hergestellt bzw. ausgebildet ist. Allgemein bevorzugt ist die Innenhülse aus einem härteren Material als der Dichtring hergestellt bzw. ausgebildet. Allgemein bevorzugt weist das Axialpressfitting mehrere Dichtringe auf, die axial hintereinander angeordnet sind. Zur vorteilhaften Ausführungsform beschriebene Merkmale, die sich auf einen Dichtring des Axialpressfittings beziehen, können in Ausführungsformen, in denen das Axialpressfitting mehrere Dichtringe aufweist, zu jedem der Dichtringe zutreffend sein.

In einer Ausführungsform weist der Rohrstutzen an seiner Außenseite zumindest eine die Achse umlaufende Aufnahme auf, in der der Dichtring angeordnet ist, und zwar sowohl in der Ausgangsanordnung als auch der Montageanordnung. Die Aufnahme kann beispielsweise als um die Achse umlaufende Rinne ausgebildet sein. In einer Ausführungsform weist der Rohrstutzen an seiner Außenseite mehrere, axial hintereinander angeordnete, die Achse umlaufende Aufnahmen auf, wobei der Dichtring in einer der Aufnahmen angeordnet ist. Bevorzugt ist der Dichtring dergestalt in der Aufnahme angeordnet, dass er in einem Installationszustand des Axialpressfittings, in dem die Bestandteile des Axialpressfitting in der Montageanordnung angeordnet sind, zwischen dem Rohrstutzen und einem in den Aufnahmeraum eingeführten Leitungsrohr radial verpresst werden kann, damit er eine Abdichtung zwischen Rohrstutzen und Leitungsrohr gewährleisten kann. In einer Ausführungsform weist das Axialpressfitting einen ersten Dichtring auf, der in einer ersten der Aufnahmen angeordnet ist, sowie einen zweiten Dichtring auf, der in einer zweiten der Aufnahmen angeordnet ist. Allgemein bevorzugt können die Dichtringe bzw. kann der Dichtring als elastischer Dichtring ausgebildet sein. Die Anordnung des jeweiligen Dichtrings in der jeweiligen Aufnahme ist dabei dergestalt vorgesehen, dass der Dichtring geeignet ist, während er in der jeweiligen Aufnahme angeordnet ist, in dem Installationszustand des Axialpressfittings zwischen dem Rohrstutzen und dem Leitungsrohr radial verpresst zu werden. Der Dichtring ist an seiner radialen Außenseite somit zugänglich, während er in der Aufnahme angeordnet ist, sodass das Leitungsrohr beim radialen Verpressen gegenüber dem Rohrstutzen in Anlage an den Dichtring gelangen kann, wodurch der Installationszustand realisiert werden kann bzw. eine abdichtende Verbindung zwischen Rohrstutzen und Leitungsrohr mittels des Dichtrings hergestellt werden kann.

In einer Ausführungsform weist die Aufnahme zwei axial voneinander beabstandete Aufnahmewände auf, zwischen denen der Dichtring angeordnet ist. Jede der Aufnahmewände weist jeweils eine radiale Außenseite auf, wobei die Außenseite von zumindest einer der Aufnahmewände radial auf gleicher Höhe wie eine radiale Außenseite des Dichtrings verläuft oder über die radiale Außenseite des Dichtrings vorsteht. Hierdurch kann der Dichtring bzw. die Außenseite des Dichtrings besonders gut geschützt sein. Insbesondere kann hierdurch gewährleistet sein, dass bei dem Aufschieben eines Leitungsrohrs auf den Rohrstutzen, währenddessen der Rohrstutzen radial innerhalb des Leitungsrohrs angeordnet wird, das Leitungsrohr den Dichtring nicht beschädigt, da die radialen Außenseiten der Aufnahmewände zumindest auf gleicher Höhe wie die radiale Außenseite des Dichtrings verlaufen. Allgemein bevorzugt ist zumindest die Außenseite derjenigen Aufnahmewand auf gleicher Höhe wie die Außenseite des Dichtrings oder steht über diese vor, die axial näher an der Öffnung der Aufnahmeraums ist, durch die hindurch sich das Leitungsrohr in der Montageanordnung von dem Rohrstutzen weg axial nach außen erstreckt bzw. die das Leitungsrohr bei einem axialen Aufschieben auf den Rohrstutzen zum Realisieren der Ausgangsanordnung zuerst passiert, so dass eine Beschädigung des Dichtrings beim Aufschieben des Leitungsrohrs besonders effektiv verhindert sein kann. Mit seiner radialen Außenseite gelangt der Dichtring bei einem radialen Verpressen des Leitungsrohrs gegenüber dem Rohrstutzen in Anlage an die Innenseite des Leitungsrohrs. Bei einem solchen radialen Verpressen des Leitungsrohrs relativ zum Rohrstutzen, das erfindungsgemäß mittels eines Verschiebens der Außenhülse relativ zur Innenhülse entlang der Achse erfolgt, gelangt die Innenseite des Leitungsrohrs in Anlage an die Außenseiten der Aufnahmewände und unter Eingreifen in die Aufnahme an die radiale Außenseite des Dichtrings. Bevorzugt sind die Aufnahmewände, die gemeinsam die Aufnahme ausbilden, an ihren radialen enden, die an ihren Außenseiten verlaufen, um mindestens 100 %, insbesondere mindestens 105 %, insbesondere mindestens 110 %, insbesondere mindestens 120 % einer Längserstreckungslänge des Dichtrings und somit der Dichtringstärke entlang der Achse voneinander beabstandet. Hierdurch kann ein Eindringen des Leitungsrohrs bei einem Verpressen gegenüber dem Rohrstutzen in die Aufnahme und somit ein Gelangen des Leitungsrohrs an die radiale Außenseite des Dichtrings besonders bevorzugt ermöglicht sein. Bevorzugt weist jede der Aufnahmewände der Aufnahme jeweils eine radiale Außenseite auf, wobei die Außenseiten beider Aufnahmewände radial auf gleicher Höhe wie eine radiale Außenseite des Dichtrings verlaufen oder über die radiale Außenseite des Dichtrings vorstehen. Allgemein bevorzugt sind die Aufnahmewände durch jeweils eine um die Achse umlaufende Rippe des Rohrstutzens ausgebildet. Bevorzugt laufen die Rippen um die Achse geschlossen umlaufend. Die vorliegenden Ausführungsformen betreffend eine Aufnahme kann bei Ausführungsformen, bei denen mehrerer Aufnahmen vorgesehen sind, auf mehrere, insbesondere sämtliche Aufnahmen zutreffen.

In einer Ausführungsform weist die Außenhülse oder weist die Innenhülse oder weisen Außenhülse und Innenhülse für jeden von dem Axialpressfitting umfassten Dichtring jeweils einen Anpressabschnitt auf, wobei in der Montageanordnung der dem jeweiligen Dichtring zugeordnete Anpressabschnitt auf einer selben axialen Höhe wie der ihm jeweils zugeordnete Dichtring angeordnet ist und zum radialen Verpressen des Dichtrings mittels des Leitungsrohrs ausgebildet ist. Durch das gezielte Vorsehen des Anpressabschnitts kann besonders gezielt ein radialer Anpressdruck auf den Dichtring erzeugt werden, wenn die Außenhülse zur Realisierung des erläuterten Installationszustands axial relativ zur Innenhülse verschoben wird und dabei eine radiale Verpressung der Innenhülse durch die Außenhülse erfolgt. Allgemein bevorzugt weist die Außenhülse bzw. Innenhülse innerhalb des Anpressabschnitts, insbesondere über den Anpressabschnitt hinweg, eine größere Wandstärke und/oder eine stärkere radiale Konturierung auf als in einem an diesen angrenzenden axialen Abschnitt. Durch das Vorsehen eines Anpressabschnitts, in dem die jeweilige Hülse, insbesondere die Innenhülse, eine größere Wandstärke und/oder stärkere radiale Konturierung aufweist als in dem an diesen angrenzenden axialen Abschnitt, kann ein besonders gezielter und hoher radialer Anpressdruck auf den Dichtring erzeugt werden, wenn die Außenhülse zur Realisierung des erläuterten Installationszustands axial relativ zur Innenhülse verschoben wird und dabei eine radiale Verpressung der Innenhülse durch die Außenhülse erfolgt. Allgemein bevorzugt ist eine Innenseite der Innenhülse bzw. eine Innenseite der Außenhülse in der Montageanordnung über die axiale Erstreckungslänge des Anpressabschnitts hinweg radial weniger weit von einer der Innenseite der jeweiligen Hülse radial gegenüberliegenden Außenseite des Rohrstutzens beabstandet als in zumindest einem an den Anpressabschnitt angrenzenden axialen Abschnitt. Hierdurch kann eine besonders starke radiale Kraftausübung auf ein in der Montageanordnung in dem Aufnahmeraum angeordnetes Leitungsrohr entlang der axialen Erstreckung des Anpressabschnitts gewährleistet sein. Bevorzugt weist der Anpressabschnitt um die Achse geschlossen umlaufend eine konstante Wandstärke und/oder einen konstanten radialen Abstand von der Außenseite des Rohrstutzens auf. Bevorzugt ist an beiden Seiten des Anpressabschnitts an diesen angrenzend jeweils ein axialer Abschnitt der jeweiligen Hülse vorgesehen, in dem die jeweilige Hülse eine geringere Wandstärke als in dem Anpressabschnitt aufweist oder in dem die jeweilige Hülse radial weiter von der Außenseite des Rohrstutzens beabstandet ist als in dem Anpressabschnitt. Indem zumindest ein an den Anpressabschnitt axial angrenzender axialer Abschnitt wie erläutert anders gestaltet ist, insbesondere die an beiden axialen Seiten des Anpressabschnitts an diesen jeweils angrenzenden axialen Abschnitte wie erläutert anders ausgestaltet sind, kann eine besonders gezielte und somit besonders hohe Anpresskraft auf ein Leitungsrohr auf axialer Höhe des Dichtrings erzeugt werden, wodurch ein Installationszustand erzeugt werden kann, in dem eine besonders zuverlässige Abdichtung zwischen Rohrstutzen und Leitungsrohr durch den Dichtring gewährleistet ist. In einer Ausführungsform ist ein Anpressabschnitt mehreren Dichtringen zugeordnet und ist somit in der Montageanordnung über eine axiale Erstreckungslänge hinweg angeordnet, innerhalb derer die ihm zugeordneten Dichtringe angeordnet sind. In einer Ausführungsform weist das Axialpressfitting mehrere Dichtringe auf, wobei jedem Dichtring jeweils genau ein Anpressabschnitt zugeordnet ist, wobei in der Montageanordnung, und insbesondere im vorliegend erläuterten Installationszustand, ein radialer Abstand zwischen der radialen Außenseite des Rohrstutzens und der radialen Innenseite der Innenhülse, und somit zwischen der Außenseite des Rohrstutzens und dem dem jeweiligen Dichtring zugeordneten Anpressabschnitt, auf der axialen Höhe eines ersten der Dichtringe sich von einem radialen Abstand zwischen der radialen Außenseite des Rohrstutzens und der radialen Innenseite der Innenhülse auf der axialen Höhe eines zweiten der Dichtringe unterscheidet, wobei die axiale Höhe des Dichtrings durch die axiale Relativposition einer axialen Mitte des jeweiligen Dichtrings relativ zu dem Rohrstutzen definiert ist. Im Falle einer Festlegung der axialen Relativposition auf einen Positionsbereich ist der radiale Abstand bevorzugt über die Anordnung des jeweiligen Dichtrings innerhalb des Positionsbereichs hinweg gleich. In einer Ausführungsform weist das Axialpressfitting mehrere Dichtringe auf, wobei jedem Dichtring jeweils genau ein Anpressabschnitt zugeordnet ist, die verschiedenen Dichtringe durch die ihnen jeweils zugeordneten Anpressabschnitte unterschiedlich verpresst sind. In einer Ausführungsform weist das Axialpressfitting mehrere Dichtringe auf, wobei jedem Dichtring jeweils genau ein Anpressabschnitt zugeordnet ist, wobei sich die verschiedenen Anpressabschnitte, die jeweils einem anderen Dichtring zugeordnet sind, unterscheiden, insbesondere in ihrer Wandstärke und/oder in dem radialen Abstand, um den sie von der Außenseite des Rohrstutzens beabstandet sind. Durch das Vorsehen von einzelnen Dichtringen gezielt zugeordneten Anpressabschnitte, insbesondere wie vorliegend zu bevorzugten Ausführungsformen erläutert, können unterschiedliche Dichtring-Anpressabschnitt-Anordnungen bereitgestellt sein, die axial voneinander beabstandet sind und die einem jeweils anderen Zweck dienen können. Beispielsweise können die erläuterten Anordnungen eine gestaffelte Verpressung des Leitungsrohrs im Installationszustand bereitstellen, nämlich eine in unterschiedlichen axialen Bereichen unterschiedliche Verpressung. Beispielsweise kann durch die unterschiedlichen Anordnungen eine jeweils möglichst optimale verpressende Abdichtung von Leitungsrohren mit unterschiedlichen Leitungsrohwanddicken bereitgestellt sein. In einer Ausführungsform ist der Anpressabschnitt in einem Installationszustand des Axialpressfittings, in dem die Bestandteile des Axialpressfittings in der Montageanordnung zueinander angeordnet sind und das Leitungsrohr in dem Aufnahmeraum angeordnet und durch ein Zusammenwirken von Innenhülse und Außenhülse gegen den Rohrstutzen verpresst sind, axial verbreitert gegen das Leitungsrohr gepresst. In dem Installationszustand ist der Anpressabschnitt somit axial breiter, d. h. weist eine größere axiale Erstreckungslänge auf, als in einer Ruhelage, in der der Anpressabschnitt nicht durch eine externe Kraft belastet ist. Hierzu kann besonders vorteilhaft der erläuterte an den Anpressabschnitt angrenzende axiale Abschnitt vorgesehen sein, da der Anpressabschnitt sich in den axialen Erstreckungsbereich dieses an ihn angrenzenden Abschnitts hinein verbreitern kann. In einer Ausführungsform ist in der Montageanordnung ein unterschiedlicher radialer Abstand zwischen unterschiedlichen Dichtringen und den ihnen jeweils zugeordneten Anpressabschnitten vorgesehen. Hierdurch kann eine in unterschiedlichen axialen Bereichen unterschiedliche Verpressung eines Leitungsrohrs im Installationszustand bereitgestellt sein und/oder ein zuverlässiges Abdichten von Leitungsrohren mit unterschiedlicher Leitungsrohrwanddicke besonders vorteilhaft ermöglicht sein. In einer Ausführungsform ist der Anpressabschnitt axial versetzt zu dem zu Ausführungsformen erläuterten Halteabschnitt angeordnet. In einer Ausführungsform ist der Anpressabschnitt axial versetzt zu dem in Ausführungsformen erläuterten Fixierabschnitt angeordnet. In einer Ausführungsform ist der Anpressabschnitt axial versetzt zu dem Halteabschnitt und zu dem Fixierabschnitt angeordnet, bevorzugt ist der Anpressabschnitt axial zwischen Halteabschnitt und Fixierabschnitt angeordnet. Durch die axial versetzte Anordnung des Anpressabschnitts kann der Anpressabschnitt im Installationszustand auf vorteilhafte Weise eine abdichtende Verpressung zwischen Leitungsrohr und Rohrstutzen gewährleisten, wohingegen der Halteabschnitt bzw. Fixierabschnitt davon unabhängig zu einer zuverlässigen Fixierung der Außenhülse relativ zur Innenhülse bzw. relativ zum Rohrstutzen beitragen kann.

In einer Ausführungsform weist die Außenhülse eine Wandstärke auf, die über mindestens 80 %, insbesondere über mindestens 90 %, insbesondere über 100 %, ihrer Längserstreckungslänge hinweg um weniger als 20 %, insbesondere um weniger als 15 %, insbesondere um weniger als 10 %, insbesondere um weniger als 5 %, insbesondere um weniger als 3 %, insbesondere um weniger als 2 %, insbesondere um weniger als 1 % variiert. Allgemein sei darauf hingewiesen, dass die Längserstreckungslänge eines Bestandteils des Axialpressfittings seine Erstreckungslänge entlang der Achse angibt. Durch das Vorsehen einer über einen zumindest überwiegenden Anteil der Längserstreckungslänge der Außenhülse im Wesentlichen konstanten Wandstärke kann die Außenhülse besonders einfach und kostengünstig realisierbar sein. Allgemein bevorzugt weist die Außenhülse eine Wandstärke auf, die mehr als 0,2 mm, insbesondere mehr als 0,3 mm, insbesondere mehr als 0,4 mm und darüber hinaus weniger als 2 mm, insbesondere weniger als 1,8 mm, insbesondere weniger als 1,5 mm, insbesondere maximal 1,3 mm, insbesondere weniger als 1 mm beträgt.

In einer Ausführungsform weist eine Außenseite der Innenhülse und/oder eine Innenseite der Außenhülse, und insbesondere die Innenseite der Innenhülse und/oder die Außenseite der Außenhülse, einen sich über einen axialen Erstreckungsabschnitt hinweg entlang der Achse vergrößernden Durchmesser auf. Der axiale Erstreckungsabschnitt ist ein Erstreckungsabschnitt der Außenhülse bzw. Innenhülse, mit dem sie sich entlang der Achse erstreckt. In der Montageanordnung erstreckt sich der axiale Erstreckungsabschnitt der Außenhülse, sofern ein solcher mit den vorliegend beschriebenen Eigenschaften vorgesehen ist, über seine gesamte Erstreckungslänge entlang der Achse hinweg entlang der Innenhülse, insbesondere über den entsprechenden axialen Erstreckungsabschnitt der Innenhülse hinweg, sofern ein solcher vorgesehen ist, und erstreckt sich der axiale Erstreckungsabschnitt der Innenhülse, sofern ein solcher mit den vorliegend erläuterten Eigenschaften vorgesehen ist, über seine gesamte Erstreckungslänge entlang der Achse hinweg entlang der Außenhülse, insbesondere über den axialen Erstreckungsabschnitt der Außenhülse hinweg, sofern ein solcher mit den erläuterten Eigenschaften vorgesehen ist. Bevorzugt weist die Außenseite der Innenhülse über den axialen Erstreckungsabschnitt der Innenhülse hinweg einen sich entlang der Achse in Richtung entgegen der axialen Verschieberichtung vergrößernden Durchmesser auf. Bevorzugt weist die Innenseite der Außenhülse über den axialen Erstreckungsabschnitt der Außenhülse hinweg einen entlang der Achse in Richtung entgegen der axialen Verschieberichtung sich vergrößernden Durchmesser auf. Bevorzugt bildet der axiale Erstreckungsabschnitt der Innenhülse den zu Ausführungsformen vorliegend erläuterten zumindest einen Anpressabschnitt der Innenhülse aus. Indem sich der Durchmesser der Außenseite der Innenhülse bzw. der Außendurchmesser der Innenhülse über den axialen Erstreckungsabschnitt der Innenhülse hinweg vergrößert, bzw. indem sich der Durchmesser der Innenseite der Außenhülse, d. h. der Innendurchmesser der Außenhülse, über den axialen Erstreckungsabschnitt der Außenhülse hinweg entlang der Achse vergrößert, kann an unterschiedlichen Positionen entlang der Achse eine jeweils unterschiedliche Verpressung auf ein Leitungsrohr, das in der Montageanordnung im Aufnahmeraum angeordnet ist, ausgeübt werden, wodurch ein unerwünschtes Abgleiten von Komponenten des Axialpressfittings entlang der Achse relativ zueinander in der Montageanordnung besonders effektiv verhindert sein kann. Besonders bevorzugt ist die Innenhülse über ihren axialen Erstreckungsabschnitt hinweg konisch ausgebildet, insbesondere mit entlang der Achse entgegen der axialen Verschieberichtung sich vergrößerndem Durchmesser. Besonders bevorzugt weist die Außenseite der Innenhülse in der Ausgangsanordnung über den genannten axialen Erstreckungsabschnitt der Innenhülse hinweg einen sich entlang der Achse vergrößernden Durchmesser auf, wobei in der Montageanordnung aufgrund einer erfolgten Verpressung der Innenhülse durch die Außenhülse die Außenseite der Innenhülse über ihren axialen Erstreckungsabschnitt hinweg einen konstanten Durchmesser aufweist. Somit erfolgt bevorzugt ausgehend von der Ausgangsanordnung bis zum Erreichen der Montageanordnung eine solche Verpressung, dass die Innenhülse dergestalt verformt wird, dass ihr Außendurchmesser, der in der Ausgangsanordnung einen sich entlang der Achse vergrößernden Durchmesser aufweist, in der Montageanordnung über den axialen Erstreckungsabschnitt hinweg konstant ist. Die Innenseite der Außenhülse ist entsprechend bevorzugt über einen axialen Erstreckungsabschnitt der Außenhülse hinweg, der sich in der Montageanordnung über den axialen Erstreckungsabschnitt der Innenhülse hinweg erstreckt, nach Art einer Innenseite eines Hohlzylinders ausgebildet und somit als zylindrische Wandungsinnenseite der Außenhülse ausgebildet. Durch den sich über den axialen Erstreckungsabschnitt vergrößernden Durchmesser ist eine besonders zuverlässige Fixierung der Außenhülse relativ zur Innenhülse in der Montageanordnung gewährleistet. Bevorzugt ist die besonders zuverlässige Fixierung zwischen Innenhülse und Außenhülse in der Montageanordnung darüber hinaus durch ein Ineinandergreifen einer vorliegend zu Ausführungsformen erläuterten Fixieranordnung der Außenhülse mit einem Fixierabschnitt der Innenhülse gewährleistet. Besonders bevorzugt erstreckt sich der axiale Erstreckungsabschnitt der Innenhülse über mindestens 10 %, insbesondere mindestens 20 %, insbesondere mindestens 30 %, einer Gesamterstreckungslänge der Innenhülse, mit der sich die Innenhülse entlang der Achse erstreckt. Dies trifft bevorzugt ebenfalls auf den axialen Erstreckungsabschnitt der Außenhülse zu. Allgemein bevorzugt ist in der Montageanordnung eine maximale radiale Verpressung zwischen Innenhülse und Außenhülse innerhalb des genannten axialen Erstreckungsabschnitts gegeben, sodass Innenhülse und Außenhülse über den gesamten Erstreckungsbereich entlang der Achse, über den hinweg sie sich in der Montageanordnung überlappen, an einer solchen Stelle mit einer größten radiale Presskraft miteinander verpresst sind, die innerhalb des axialen Erstreckungsabschnitts liegt. Besonders bevorzugt schließt sich an zumindest ein axiales Ende des axiale Erstreckungsabschnitts ein zylindrischer Abschnitt der Innenhülse oder eine in der Außenseite der Innenhülse vorgesehene Einschnürung an. Hierdurch kann besonders vorteilhaft begünstigt sein, dass innerhalb des axialen Erstreckungsabschnitts eine hohe radiale Verpressung zwischen Innenhülse und Außenhülse in der Montageanordnung erfolgt, da das Material der Innenhülse einer solchen Ausführungsform innerhalb des axialen Erstreckungsabschnitts besonders vorteilhaft verpressbar ist. Bevorzugt schließt sich an jedes axiale Ende des axialen Erstreckungsabschnitts jeweils entweder ein zylindrischer Abschnitt der Innenhülse oder eine in der Außenseite der Innenhülse vorgesehene Einschnürung an. Der Außendurchmesser der Innenhülse ist innerhalb der Einschnürung kleiner als an den beiden axial zu der Einschnürung benachbarten Abschnitten der Innenhülse, die beidseitig an die Einschnürung angrenzen.

In einer Ausführungsform weist die Außenhülse einen ersten axialen Außenhülsenabschnitt auf, in dem sie einen ersten Durchmesser aufweist, und einen zweiten Außenhülsenabschnitt auf, in dem sie einen zweiten Durchmesser aufweist, wobei der erste Durchmesser kleiner als der zweite Durchmesser ist und wobei in der Ausgangsanordnung der erste axiale Außenhülsenabschnitt axial versetzt zu der Innenhülse angeordnet ist und der zweite Außenhülsenabschnitt mit der Innenhülse axial überlappend und diese radial umschließend angeordnet ist. Durch das Vorsehen von dem erläuterten ersten und zweiten axialen Außenhülsenabschnitt bei unterschiedlichen Durchmessern kann zum einen die Außenhülse mittels des zweiten Außenhülsenabschnitts vorteilhaft zur Realisierung der Ausgangsanordnung an der Innenhülse angeordnet und insbesondere relativ zu dieser positionsfest gehalten werden, wohingegen durch das Vorsehen des ersten Außenhülsenabschnitts ein vorteilhaftes radiales Verpressen der Innenhülse gewährleistet sein kann, wenn die Außenhülse ausgehend von der Ausgangsanordnung zur Realisierung der Montageanordnung relativ zur Innenhülse bewegt wird und dabei der zweite Außenhülsenabschnitt axial außen auf die Innenhülse aufgeschoben wird. Allgemein kann zumindest einer von erstem und zweiten Außenhülsenabschnitt, insbesondere zumindest der erste Außenhülsenabschnitt, zylindrisch ausgebildet sein. Bevorzugt bildet der erste Außenhülsenabschnitt einen axialen Erstreckungsabschnitt der Außenhülse aus, der sich in der Montageanordnung über denjenigen vorliegend erläuterten axialen Erstreckungsabschnitt der Innenhülse hinweg erstreckt, über den hinweg die Innenhülse in der Ausgangsanordnung einen sich entlang der Achse vergrößernden Außendurchmesser aufweist. Bei einer nicht-zylindrischen Ausgestaltung des jeweiligen Außenhülsenabschnitts bezieht sich die Angabe eines Werts für seinen Durchmesser auf einen über die Erstreckungslänge des jeweiligen Außenhülsenabschnitts, die dieser entlang der Achse aufweist, gemittelten Durchmesser. Allgemein bevorzugt ist der erste Außenhülsenabschnitt in der Montageanordnung mit der Innenhülse axial überlappend und diese radial umschließend angeordnet, wobei besonders bevorzugt die Innenhülse den vorliegend erläuterten Anpressabschnitt aufweist und in der Montageanordnung der erste Außenhülsenabschnitt mit dem Anpressabschnitt axial überlappend und diesen radial umschließend angeordnet ist.

In einer Ausführungsform weist die Außenhülse einen axialen Verbindungsabschnitt auf, der den ersten Außenhülsenabschnitt mit dem zweiten Außenhülsenabschnitt verbindet und innerhalb dessen sich der Durchmesser der Außenhülse vom ersten Durchmesser zum zweiten Durchmesser verändert. Bevorzugt ist der Verbindungsabschnitt nach Art eines Stufenabschnitts ausgebildet, sodass sich innerhalb des Verbindungsabschnitts der Durchmesser der Außenhülse stufenartig vom ersten Durchmesser zum zweiten Durchmesser verändert. Durch das Vorsehen von definierten axialen Abschnitten, nämlich erstem und zweitem Außenhülsenabschnitt einerseits und Verbindungsabschnitt andererseits, können die Außenhülsenabschnitte gezielt auf den für sie jeweils vorgesehenen Zweck hin ausgebildet sein, wohingegen der Verbindungsabschnitt eine feste Verbindung der Außenhülsenabschnitte gewährleistet. Insbesondere kann der erste Außenhülsenabschnitt zum radialen Verpressen der Innenhülse ausgebildet sein, wohingegen der zweite Außenhülsenabschnitt zum zumindest vorübergehenden positionsfesten Halten der Außenhülse an der Innenhülse in der Ausgangsanordnung, und insbesondere in der Montageanordnung, ausgebildet sein kann, wobei dieses positionsfeste Halten durch eine axiale Belastung, d. h. durch Belastung der Außenhülse mit einer axialen Kraft relativ zur Innenhülse, aufgelöst werden kann und mit dieser axialen Kraft die Außenhülse relativ zur Innenhülse verschoben werden kann zur Realisierung der Montageanordnung ausgehend von der Ausgangsanordnung.

In einer Ausführungsform erstrecken sich der erste und der zweite Außenhülsenabschnitt jeweils über mindestens 10 %, insbesondere mindestens 15 % der Längserstreckungslänge der Außenhülse. In einer Ausführungsform beträgt der erste Durchmesser weniger als 98 %, insbesondere weniger als 95 %, insbesondere weniger als 93 %, insbesondere weniger als 90 % des zweiten Durchmessers. In einer Ausführungsform ist der erste Außenhülsenabschnitt länger als der zweite Außenhülsenabschnitt. Indem sich der erste Durchmesser wie erläutert auf relevante Weise von dem zweiten Durchmesser unterscheidet, kann durch die axiale Verschiebung der Außenhülse relativ zur Innenhülse zum Erreichen der Montageanordnung durch den ersten Außenhülsenabschnitt besonders vorteilhaft eine radiale Anpresskraft erzeugt sein. Durch die erhebliche Länge des ersten Außenhülsenabschnitts kann eine Verpressung eines Leitungsrohrs im Installationszustand des Axialpressfittings besonders zuverlässig und dauerhaft gewährleistet sein. Allgemein bevorzugt erstreckt sich der erste Außenhülsenabschnitt über mindestens 20 %, insbesondere mindestens 30 %, insbesondere mindestens 40 % der Längserstreckungslänge der Außenhülse. Allgemein bevorzugt erstreckt sich der Verbindungsabschnitt über weniger als 30 %, insbesondere weniger als 20 %, insbesondere weniger als 15 %, insbesondere über weniger als 10 % der Längserstreckungslänge der Außenhülse. Allgemein bevorzugt ist der Verbindungsabschnitt kürzer als der zweite Außenhülsenabschnitt, d. h. erstreckt sich über eine geringere Länge entlang der Achse als der zweite Außenhülsenabschnitt. Indem der Verbindungsabschnitt eine nur geringe Längserstreckungslänge aufweist, kann durch ihn ein definierter Übergang zwischen erstem und zweitem Außenhülsenabschnitt gewährleistet sein, ohne dass eine übergroße Länge der Außenhülse erforderlich ist und ohne dass die Funktionalität von erstem und zweitem Außenhülsenabschnitt beeinträchtigt ist. Allgemein bevorzugt weist der Verbindungsabschnitt an seiner Innenseite einen zur Achse schrägen, insbesondere abgerundeten Verlauf auf, wodurch ein beschädigungsarmes Zusammenwirken zwischen der Innenseite der Außenhülse und der Außenseite der Innenhülse beim Verschieben der Außenhülse relativ zur Innenhülse zum Erreichen der Montageanordnung ausgehend von der Ausgangsanordnung gewährleistet sein kann.

In einer Ausführungsform weist der erste Außenhülsenabschnitt eine Form nach Art eines Hohlzylinders auf. In einer Ausführungsform weist der zweite Außenhülsenabschnitt eine Form nach Art eines Hohlzylinders auf. Indem die Außenhülsenabschnitte eine Form nach Art eines Hohlzylinders aufweisen, weisen Sie zumindest über einen überwiegenden Anteil ihrer Erstreckung hinweg einen konstanten Durchmesser senkrecht zur Achse auf. Durch die Ausgestaltung der Außenhülsenabschnitte nach Art eines Hohlzylinders kann die Außenhülse besonders vorteilhaft und kostengünstig herstellbar sein und kann darüber hinaus besonders effektiv verhindert sein, dass bei einer Aufbewahrung von einer Vielzahl an Außenhülsen als Schüttgut ein Verklemmen der Außenhülse miteinander erfolgt, was für eine besonders einfache und kostengünstige Herstellbarkeit des Axialpressfittings im industriellen Maßstab besonders vorteilhaft ist. Der Erfindung liegt die besondere Erkenntnis zugrunde, dass aufgrund der erfindungsgemäß gezielt vorgenommenen Ausgestaltung des Axialpressfittings und seiner Außenhülse auch die Realisierung einer Außenhülse ermöglicht ist, die über einen überwiegenden Anteil ihrer Längserstreckungslänge, insbesondere über mindestens 70 %, insbesondere mindestens 80 %, insbesondere mindestens 90 % ihrer Längserstreckungslänge, nach Art eines Hohlzylinders ausgebildet ist, wobei sie verschiedene axiale Abschnitte, insbesondere ersten und zweiten Außenhülsenabschnitt, aufweisen kann, in denen sie zwar jeweils nach Art eines Hohlzylinders, jedoch mit jeweils unterschiedlichem Durchmesser ausgebildet ist.

In einer Ausführungsform weist die Außenhülse an ihrer radialen Innenseite eine radiale Halteanordnung auf, die in der Ausgangsanordnung an einem zu ihr korrespondierenden, an der radialen Außenseite der Innenhülse vorgesehen Halteabschnitt fixiert, insbesondere mit diesem verklemmt oder verrastet ist. Hierdurch kann eine verliersichere Fixierung der Außenhülse an der Innenhülse in der Ausgangsanordnung gewährleistet sein und somit eine besonders einfache Handhabbarkeit des Axialpressfittings für einen Monteur, wenn er ein Leitungsrohr mit dem Axialpressfitting abdichtend verbinden möchte. Hierzu braucht er lediglich das Leitungsrohr in den an einem axialen Ende offenen Aufnahmeraum einzuschieben, während die Außenhülse an der Innenhülse aufgrund des Zusammenwirkens von Halteanordnung und Halteabschnitt gehalten ist. Allgemein bevorzugt ist die Halteanordnung in einem ersten axialen Endbereich der Außenhülse vorgesehen, wobei die Außenhülse mit ihrem dem ersten Endbereich axial gegenüberliegenden Endbereich in der Ausgangsordnung axial neben der Innenhülse angeordnet ist bzw. axial die Innenhülse überragt. In einer Ausführungsform weist die Außenhülse die erläuterten ersten und zweiten axialen Außenhülsenabschnitte auf, wobei die radiale Halteanordnung innerhalb, insbesondere ausschließlich innerhalb, ihres zweiten Außenhülsenabschnitts angeordnet ist.

In einer Ausführungsform weist die Außenhülse an ihrer radialen Innenseite eine radiale Fixieranordnung auf, die in der Montageanordnung mit einem zu ihr korrespondierenden, an der radialen Außenseite der Innenhülse oder an der radialen Außenseite des Rohrstutzens vorgesehenen Fixierabschnitt fixiert, insbesondere verklemmt oder verrastet, ist. Hierdurch kann eine besonders zuverlässige Aufrechterhaltung der Montageanordnung und somit der darin vorgesehenen relativen Anordnung der Bestandteile des Axialpressfittings zueinander gewährleistet sein. Dies kann besonders vorteilhaft dafür sein, im Installationszustand bzw. in der Montageanordnung des Axialpressfittings eine besonders dauerhafte und zuverlässige Abdichtung des Axialpressfittings relativ zum Leitungsrohr zu gewährleisten.

In einer Ausführungsform ist die Fixieranordnung der Außenhülse durch die Halteanordnung der Außenhülse ausgebildet. Bevorzugt entsprechen sich Fixieranordnung und Halteanordnung. Somit kann durch das Vorsehen von nur einer Anordnung sowohl eine axiale Fixierung der Außenhülse relativ zur Innenhülse in der Ausgangsanordnung als auch ein axiales Fixieren der Außenhülse relativ zur Innenhülse in der Montageanordnung gewährleistet sein. Besonders bevorzugt sind der Halteabschnitt und der Fixierabschnitt durch die Innenhülse ausgebildet und axial voneinander beabstandet. Bevorzugt wirkt die Halteanordnung, die identisch zur Fixieranordnung ist, in der Ausgangsanordnung mit dem Halteabschnitt der Innenhülse zusammen und in der Montageanordnung mit dem Fixierabschnitt der Innenhülse zusammen.

Allgemein bevorzugt ist die Fixieranordnung und/oder ist die Halteanordnung durch eine mechanische Bearbeitung der Außenhülse bzw. eines von der Außenhülse umfassten Teils hergestellt. Beispielsweise kann die Fixieranordnung bzw. Halteanordnung ausschließlich durch Umformung eines Rohrs oder eines Blechs realisiert sein, beispielsweise indem in das Rohr bzw. Blech eine Sicke eingeprägt ist oder indem das Rohr bzw. Blech eine Umbördelung erfahren hat, wobei durch die Sicke bzw. Umbördelung ein Vorsprung ausgebildet ist, der in der Ausgangsanordnung bzw. Halteanordnung mit dem Halteabschnitt der Innenhülse verrastet und/oder indem eine Ausstanzung in dem Rohr bzw. Blech vorgesehen ist, in die in der Ausgangsanordnung bzw. Montageanordnung der Halteabschnitt bzw. Fixierabschnitt der Innenhülse eingreift. Besonders bevorzugt ist die Fixieranordnung dergestalt ausgebildet, dass sie eine radial nach innen gewandte Kante aufweist. Bevorzugt ist die nach innen gewandte Kante eckig ausgebildet, insbesondere scharfkantig ausgebildet. Besonders bevorzugt ist die nach innen gewandte Kante durch ein freies Ende einer aus dem Blech bzw. Rohr gestanzten, radial nach innen ausgestellten Ausstelllasche oder durch ein radial nach innen umgebogenes Ende der Außenhülse gebildet. Bei einer Herstellung der Außenhülse zumindest teilweise aus einem Blech kann beispielsweise zunächst das Blech zu einer Hülse geformt werden, wonach anschließend aus dieser Hülse die Außenhülse des Axialpressfittings hergestellt wird, wobei zur Herstellung der Außenhülse die Ausstelllasche in das Blech gestanzt wird, beispielsweise vor oder nach der Realisierung der Hülse aus dem Blech, oder alternativ ein freies Ende der erzeugten Hülse umgebogen wird. Die Umbiegung des freien Endes der Außenhülse kann beispielsweise durch ein Umbördeln bzw. Umfalzen erfolgen.

In einer Ausführungsform ist die Halteanordnung und/oder ist die Fixieranordnung durch eine radial nach innen ragende Vorsprungsanordnung der Außenhülse ausgebildet. In einer Ausführungsform ist die Halteanordnung und/oder ist die Fixieranordnung durch eine sich radial nach außen erstreckende Ausnehmungsanordnung der Außenhülse ausgebildet. Eine entsprechende Vorsprungsanordnung bzw. Ausnehmungsanordnung weist mindestens einen radial nach innen ragenden Vorsprung bzw. zumindest eine sich radial nach außen erstreckende Ausnehmung auf. Wesentlich ist, dass Fixieranordnung bzw. Halteanordnung und somit die Vorsprungsanordnung bzw. Ausnehmungsanordnung von der radialen Innenseite der Außenhülse aus zugänglich sind. Hierdurch kann ein Zusammenwirken der Fixieranordnung mit dem Fixierabschnitt der Innenhülse bzw. der Halteanordnung mit dem Halteabschnitt der Innenhülse ermöglicht sein. Die Ausnehmung kann beispielsweise nach Art eines Lochs oder nach Art einer Sicke ausgebildet sein, das bzw. die zur Aufnahme eines korrespondierenden, von dem Halteabschnitt bzw. Fixierabschnitt umfassten Vorsprung ausgebildet ist. Entsprechend kann ein Vorsprung beispielsweise korrespondierend zu einer Ausnehmung ausgebildet sein, die in dem Halteabschnitt bzw. Fixierabschnitt vorgesehen ist. Halteanordnung bzw. Fixieranordnung können in Ausführungsformen jeweils sowohl mindestens eine Ausnehmung als auch mindestens einen Vorsprung aufweisen. Besonders bevorzugt ist die Halteanordnung und/oder ist die Fixieranordnung in einem Teil der Außenhülse ausgebildet, das aus einem Blech oder einem Rohr hergestellt ist, wie insbesondere vorliegend zu vorteilhaften Ausführungsformen erläutert, wobei die Halteanordnung bzw. Fixieranordnung durch mechanische Bearbeitung des Blechs bzw. Rohrs ausgebildet ist. Allgemein bevorzugt ist die Halteanordnung und/oder die Fixieranordnung durch mechanische Bearbeitung eines von der Außenhülse umfassten Teils hergestellt, wobei insbesondere in Ausführungsformen die Außenhülse einteilig ausgebildet sein kann und somit durch das Teil ausgebildet sein kann, in dem die Halteanordnung und/oder Fixieranordnung durch mechanische Bearbeitung des Teils ausgebildet ist. In einer Ausführungsform ist die Halteanordnung und oder ist die Fixieranordnung um die Achse umlaufend ausgebildet und weist mehrere radial nach innen ragende Vorsprünge oder mehrere sich radial nach außen erstreckende Ausnehmungen auf, die um die Achse verteilt angeordnet und entlang eines Umlaufs um die Achse voneinander beabstandet sind, oder ist durch eine um die Achse ununterbrochen umlaufende Ausnehmung oder durch einen um die Achse ununterbrochen umlaufenden Vorsprung ausgebildet. Durch das Vorsehen von mehreren radial nach innenragenden Vorsprüngen bzw. sich nach außen ragenden Ausnehmungen kann die Halteanordnung bzw.

Fixieranordnung in der Außenhülse besonders robust und einfach realisierbar sein. Durch die um die Achse verteilte Anordnung der Vorsprünge bzw. Ausnehmungen kann eine besonders zuverlässige Fixierung der Außenhülse relativ zur Innenhülse gewährleistet sein. Bevorzugt sind die Vorsprünge bzw. Ausnehmungen gleichmäßig um die Achse verteilt angeordnet. In einer Ausführungsform ist die Fixieranordnung durch ein um die Achse geschlossen umlaufendes, umgebogenes axiales Ende der Außenhülse ausgebildet, das eine um die Achse geschlossen umlaufende, radial nach innen gewandte Kante ausbildet. In einer Ausführungsform ist die Fixieranordnung durch eine um die Achse geschlossen umlaufende Sicke ausgebildet, die in der Montageanordnung den Fixierabschnitt hintergreift oder in die der Fixierabschnitt in der Montageanordnung eingreift. Allgemein bevorzugt erstreckt sich die Fixieranordnung über eine größere Umlauflänge um die Achse als der Fixierabschnitt. In einer Ausführungsform erstreckt sich die Fixieranordnung über eine größere Umlauflänge um die Achse als der Halteabschnitt. In einer Ausführungsform erstreckt sich die Halteanordnung über eine größere Umlauflänge um die Achse als der Fixierabschnitt und insbesondere als der Halteabschnitt. Indem Fixierabschnitt bzw. Halteabschnitt sich über eine geringere Umlauflänge als Fixieranordnung bzw. Halteanordnung erstrecken, kann eine Reibung während einer axialen Verpressung zwischen Innenhülse und Außenhülse verringert sein, wodurch die axiale Verpressung vereinfacht sein kann, wohingegen durch die größere Umlauflänge der Fixieranordnung bzw. Halteanordnung dennoch eine zuverlässige Fixierung der Außenhülse an der Innenhülse gewährleistet sein kann.

In einer Ausführungsform weist die Außenhülse an ihrem in der Ausgangsanordnung zur Aufnahme des Leitungsrohrs ausgebildeten Ende einen radial umgebogenen Endabschnitt auf. In einer Ausführungsform ist der Endabschnitt radial nach innen gebogen bzw. nach innen verlaufend ausgebildet. Der radial nach innen verlaufende Endabschnitt verläuft somit im Installationszustand des Axialpressfittings radial zur Außenseite des Leitungsrohrs hin, das abschnittsweise in dem Aufnahmeraum angeordnet und relativ zum Rohrstutzen verpresst ist. Hierdurch kann eine Handhabbarkeit des Axialpressfittings besonders begünstigt sein. Beispielsweise kann durch den radial nach innen verlaufenden Endabschnitt das genannte Ende besonders vorteilhaft zum Aufbringen einer axialen Presskraft auf die Außenhülse geeignet sein, wohingegen gleichzeitig ein radial nach außen verlaufender Vorsprung an diesem Ende vermieden ist, was beispielsweise für das Aufschieben einer thermischen Isolierung bzw. einer thermischen Isolationshülle bzw. Isolationshülse außen auf das Leitungsrohr über die Außenhülse hinweg besonders vorteilhaft sein kann. Besonders bevorzugt weist die Außenhülse an dem genannten Ende mit ihrer Wandstärke zur Achse hin. Bevorzugt ist die Außenhülse aus einem Blech hergestellt, wobei das Blech so geformt ist, dass es mit der Blechstärke an dem genannten Ende, das in der Ausgangsanordnung zur Aufnahme des Leitungsrohrs ausgebildet ist, radial nach innen und somit zur Achse weist, sodass entsprechend die Außenhülse mit ihrer Wandstärke zur Achse weist. In einer Ausführungsform ist der Endabschnitt umgebogen, insbesondere radial nach außen oder radial nach innen umgebogen. Bevorzugt ist hierdurch ein umgebogener Endabschnitt ausgebildet, der radial versetzt, bevorzugt radial außerhalb, eines Erstreckungsabschnitts der Außenhülse verläuft, die sich über einen selben axialen Abschnitt wie der umgebogene Endabschnitt erstreckt. Hierdurch kann eine besonders vorteilhafte Stabilität der Außenhülse gewährleistet sein.

In einer Ausführungsform weist die Außenhülse an ihrem in der Ausgangsanordnung an der Innenhülse angeordneten Ende einen radial nach außen verlaufenden Endabschnitt auf. Hierdurch kann sowohl eine besonders hohe Steifigkeit der Außenhülse gewährleistet sein als auch eine besonders gute Aufschiebbarkeit der Außenhülse auf die Innenhülse ausgehend von der Ausgangsanordnung zum Realisieren der Montageanordnung. Besonders bevorzugt weist die Außenhülse an dem genannten Ende, an dem sie in der Ausgangsanordnung an der Innenhülse angeordnet ist, mit ihrer Wandstärke von der Achse weg, d. h. radial nach außen.

In einer Ausführungsform weist der Rohrstutzen einen Flanschabschnitt auf, von dem die Außenhülse in der Ausgangsanordnung axial weiter beabstandet ist als in der Montageanordnung, wobei die Innenhülse an dem Rohrstutzen mit einem zum Flanschabschnitt gewandten Endabschnitt fixiert, insbesondere lösbar fixiert ist, wobei insbesondere die Innenhülse mit dem zum Flanschabschnitt gewandten Endabschnitt mit dem Rohrstutzen verrastet ist. Hierdurch kann eine besonders vorteilhafte Fixierung der Innenhülse an dem Rohrstutzen gewährleistet sein. Bevorzugt ist die Innenhülse mit diesem Endabschnitt sowohl in der Ausgangsanordnung als auch in der Montageanordnung unverändert mit dem Rohrstutzen verrastet. Insbesondere kann die Außenhülse in der Ausgangsanordnung ausschließlich mittelbar über die Innenhülse am Rohrstutzen gehalten sein. Besonders bevorzugt weist die Innenhülse in dem genannten Endabschnitt eine radial nach innen ragende Vorsprungsanordnung auf. Die Vorsprungsanordnung kann durch einen ununterbrochen um die Achse umlaufenden Vorsprung oder durch mehrere, um die Achse verteilt angeordnete und entlang des Umlaufs um die Achse voneinander beabstandete Vorsprünge ausgebildet sein.

Allgemein bevorzugt weist die Innenhülse zumindest einen, insbesondere mehrere, axial verlaufende Schlitze auf, wodurch die Innenhülse besonders vorteilhaft durch die Außenhülse verpressbar ist. Bevorzugt verläuft der zumindest eine Schlitz ausgehend von einem axialen Ende, auch genannt Längsende, der Innenhülse zum gegenüberliegenden axialen Ende entlang der Achse hin. Bevorzugt verläuft der zumindest eine Schlitz bis zu dem Ende und ist somit an diesem Ende offen, das ein solches axiales Ende des Aufnahmeraums definiert, von dem aus das Leitungsrohr in den Aufnahmeraum ausgehend von der Ausgangsanordnung einführbar ist. In einer Ausführungsform weist die Innenhülse als zwei entlang der Achse voneinander abgewandte Längsenden ein erstes und ein zweites Längsende auf, wobei die Innenhülse eine Gruppe an ersten Schlitzen aufweist, die zum ersten Längsende hin offen sind und die von dem zweiten Längsende beabstandet sind, und wobei die Innenhülse eine Gruppe an zweiten Schlitzen aufweist, die zum zweiten Längsende hin offen sind und von dem ersten Längsende beabstandet sind. Indem die Schlitze jeweils zu einem Längsende hin offen sind, sodass die Schlitze an dem jeweiligen Längsende offen sind und somit von dem jeweiligen Längsende aus zugänglich sind, ist die Innenhülse aufgrund dieser Schlitze an ihrem jeweiligen Ende einfach radial komprimierbar. Indem die Schlitze jedoch an dem gegenüberliegenden Längsende beabstandet sind, ist eine hinreichende Stabilität der Innenhülse gewährleistet. Indem die genannten zwei Gruppen an Schlitzen vorgesehen sind, kann auf besonders vorteilhafte Weise gleichzeitig eine hinreichende Stabilität und eine hinreichende radiale Komprimierbarkeit der Innenhülse gewährleistet sein. Besonders bevorzugt ist das zweite Längsende der Innenhülse dasjenige axiale Ende der Innenhülse, das ein solches axiales Ende des Aufnahmeraums definiert, von dem aus das Leitungsrohr in den Aufnahmeraum ausgehend von der Ausgangsanordnung einführbar ist, wobei der gemeinsame lichte Querschnitt der ersten Gruppe an Schlitzen größer ist als der gemeinsame lichte Querschnitt der zweiten Gruppe an Schlitzen. Dies kann zum einen eine Befestigung der Innenhülse am Rohrstutzen vereinfachen und zum anderen eine hinreichende Fixierung der Außenhülse an der Innenhülse auf einfache Weise bereits in der Ausgangsanordnung ermöglichen. Besonders bevorzugt bilden zumindest einige der Schlitze der ersten Gruppe an Schlitzen ein Sichtfenster aus, durch das der Aufnahmeraum in der Ausgangsanordnung einsehbar ist, sodass über die Sichtfenster eine Positionskontrolle betreffend die Position eines in den Aufnahmeraum eingeführten Leitungsrohrs erfolgen kann. Bevorzugt ist das Sichtfenster als Verbreiterung des jeweiligen Schlitzes ausgebildet.

Die Erfindung betrifft ferner ein Set umfassend ein erfindungsgemäßes Axialpressfitting sowie ein Leitungsrohr. In einem Installationszustand des Sets, in dem das Axialpressfitting seinen Installationszustand innehat, sind die Bestandteile des Axialpressfittings in der Montageanordnung angeordnet und ist das Leitungsrohr in dem Aufnahmeraum angeordnet und ist das Leitungsrohr durch ein Zusammenwirken von Innenhülse, Außenhülse und Rohrstutzen zwischen Rohrstutzen und Innenhülse radial verpresst. Bevorzugt ist hierdurch in dem Installationszustand des Sets bzw. des Axialpressfittings der Dichtring an dem Leitungsrohr anliegend mit dem Leitungsrohr und mit dem Rohrstutzen radial verpresst. Bevorzugt ist das Leitungsrohr beschichtet. Beispielsweise kann das Leitungsrohr aus einem Kunststoff hergestellt sein, der mit einer Beschichtung beschichtet ist. Bevorzugt ist die Beschichtung eine metallische Beschichtung. Bevorzugt weist das Leitungsrohr an seiner Innenseite die Beschichtung auf. Die Innenseite begrenzt den lichten Querschnitt des Leitungsrohrs. Durch das Vorsehen der Beschichtung kann das Leitungsrohr besonders zur Trinkwasserführung geeignet sein, da hierdurch ein Diffundieren von chemischen Partikeln von einem Kunststoff in von dem Leitungsrohr geführtes Trinkwasser besonders effektiv verhindert sein kann. Besonders bevorzugt ist das Leitungsrohr ohne vorherige Aufweitung radial mit dem Axialpressfitting verpresst. Hierdurch kann eine abdichtende Verbindung zwischen Leitungsrohr und Rohrstutzen bzw. eine Realisierung des Installationszustands besonders einfach ermöglicht sein. Darüber hinaus kann hierdurch besonders vorteilhaft ein Leitungsrohr Anwendung finden, das an seiner Innenseite beschichtet ist, da eine Beschichtung nicht durch eine zu erfolgende Aufweitung des Leitungsrohrs beschädigt werden kann, da schlicht keine Aufweitung des Leitungsrohrs stattfindet sondern das Leitungsrohr, ohne dass es zuvor aufgeweitet worden ist, auf den Rohrstutzen aufgeschoben werden kann bzw. in den Aufnahmeraum eingeführt werden kann und anschließend durch axiales Verschieben der Außenhülse relativ zur Innenhülse relativ zum Rohrstutzen verpresst werden kann.

Die Erfindung betrifft ferner eine Abdichtungsanordnung umfassend ein erfindungsgemäßes Set, wobei das Set bzw. das Axialpressfitting des Sets seinen Installationszustand innehat, so dass der Rohrstutzen innerhalb des Leitungsrohrs angeordnet ist und mit dem Leitungsrohr abdichtend verbunden ist, wobei sich das Leitungsrohr ausgehend von einem ersten Ende des Rohrstutzens von diesem weg erstreckt, wobei insbesondere der Rohrstutzen ein mit dem ersten Ende fluidführend verbundenes zweites Ende aufweist, an dem ein weiteres Leitungsrohr oder ein Anschluss bzw. ein Bauteil eines Rohrleitungssystems abdichtend angeschlossen ist.

Die Erfindung betrifft ferner ein Verfahren zum abdichtenden Verbinden eines Leitungsrohrs mit einem Axialpressfitting. Das Axialpressfitting weist als Bestandteile einen Rohrstutzen, eine Innenhülse und eine Außenhülse auf, die sich jeweils entlang einer Achse axial erstrecken. Bei dem Verfahren wird eine Ausgangsanordnung der Bestandteile des Axialpressfittings zueinander realisiert, in der die Innenhülse radial innerhalb der Außenhülse angeordnet ist und der Rohrstutzen radial innerhalb der Innenhülse angeordnet ist und zwischen Rohrstutzen und Innenhülse ein Aufnahmeraum ausgebildet ist. Das Leitungsrohr wird den Rohrstutzen aufnehmend in dem Aufnahmeraum angeordnet, beispielsweise während der Realisierung der Ausgangsanordnung oder nach der Realisierung der Ausgangsanordnung, indem es in den in der Ausgangsanordnung ausgebildeten Aufnahmeraum axial eingeführt wird. Anschließend wird ausgehend von der Ausgangsanordnung der Bestandteile des Axialpressfittings eine Montageanordnung der Bestandteile des Axialpressfittings realisiert, indem die Außenhülse in einer axialen Verschieberichtung relativ zu der Innenhülse verschoben wird. Während des Verschiebens der Außenhülse relativ zur Innenhülse wird die Innenhülse aufgrund ihres Zusammenwirkens mit der Außenhülse während des Verschiebens verformt, wodurch eine radiale Erstreckung von zumindest einem axialen Abschnitt des Aufnahmeraums verkleinert wird, wodurch das Leitungsrohr radial verpresst wird. An dieser Stelle sei allgemein darauf hingewiesen, dass in Ausführungsformen, in denen die Innenhülse bzw. Außenhülse einen Anpressabschnitt aufweist, der Anpressabschnitt bevorzugt innerhalb des axialen Abschnitts des Aufnahmeraums vorgesehen ist. Gemäß einer erfindungsgemäßen Lösung wird das Leitungsrohr den Rohrstutzen aufnehmend in dem Aufnahmeraum angeordnet, beispielsweise nach Realisierung des Aufnahmeraums in den Aufnahmeraum axial eingeführt, ohne zuvor aufgeweitet worden zu sein, wobei, insbesondere innerhalb des erläuterten axialen Abschnitts, zwischen der Innenhülse und dem Rohrstutzen bevorzugt ein Dichtring vorgesehen ist und das Leitungsrohr radial gegen den Dichtring gepresst wird, wenn die Innenhülse zum Verkleinern der radialen Erstreckung des Aufnahmeraums aufgrund des Verschiebens der Außenhülse relativ zur Innenhülse verformt wird.

Die Erfindung wird nachfolgend unter Bezugnahme auf fünf Figuren anhand eines Ausführungsbeispiels näher erläutert.

Es zeigen:
- Figur 1:: in einer schematischen Prinzipdarstellung in einer perspektivischen Ansicht eine Ausführungsform eines erfindungsgemäßen Sets;
- Figur 2:: in einer schematischen Prinzipdarstellung eine Schnittdarstellung des Sets gemäß Figur 1;
- Figur 3:: in verschiedenen schematischen Prinzipdarstellungen die Innenhülse der Ausführungsform gemäß Figur 1;
- Figur 4:: in verschiedenen schematischen Prinzipdarstellungen die Außenhülse der Ausführungsform gemäß Figur 1;
- Figur 5:: in einer schematischen Prinzipdarstellung eine perspektivische Ansicht des Rohrstutzens der Ausführungsform gemäß Figur 1;
- Figur 6:: in verschiedenen schematischen Prinzipdarstellungen Ansichten einer weiteren Ausführungsform eines erfindungsgemäßen Sets;
- Figur 7:: in verschiedenen schematischen Prinzipdarstellungen verschiedene Ansichten der Außenhülse der Ausführungsform gemäß Figur 6;
- Figur 8:: in einer schematischen Prinzipdarstellung die Innenhülse der Ausführungsform gemäß Figur 6;
- Figur 9:: in verschiedenen schematischen Prinzipdarstellungen eine weitere Ausführungsform eines erfindungsgemäßen Sets.

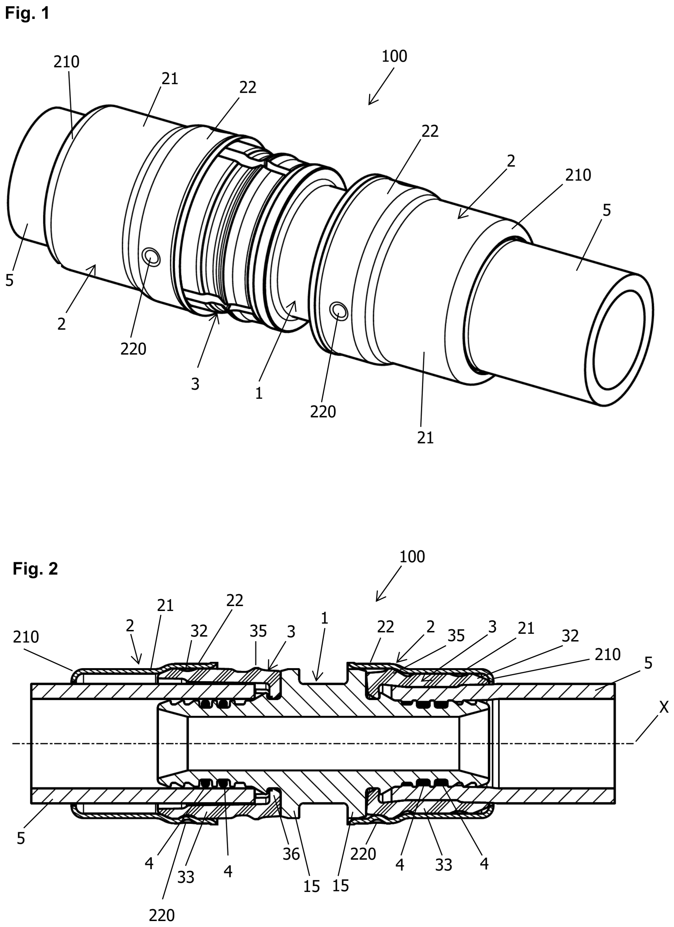

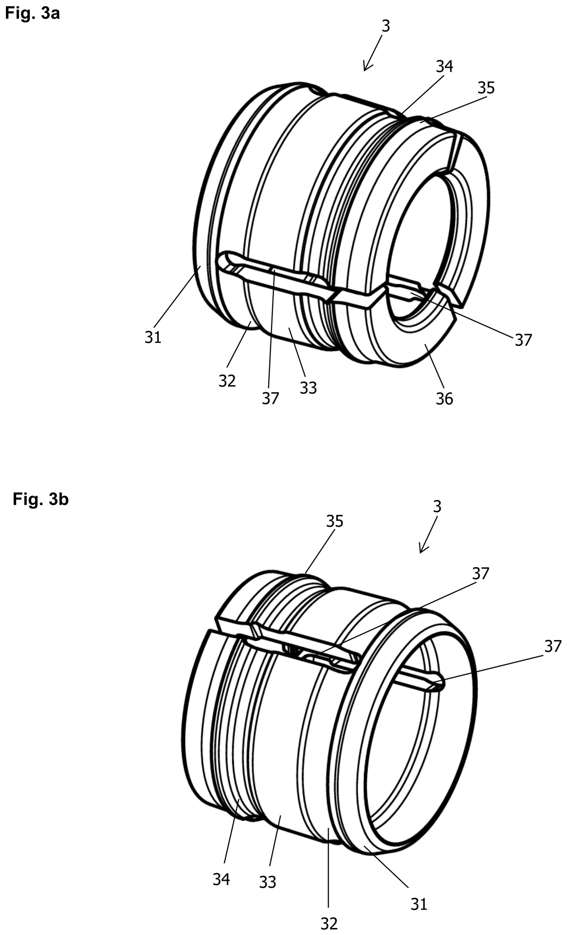

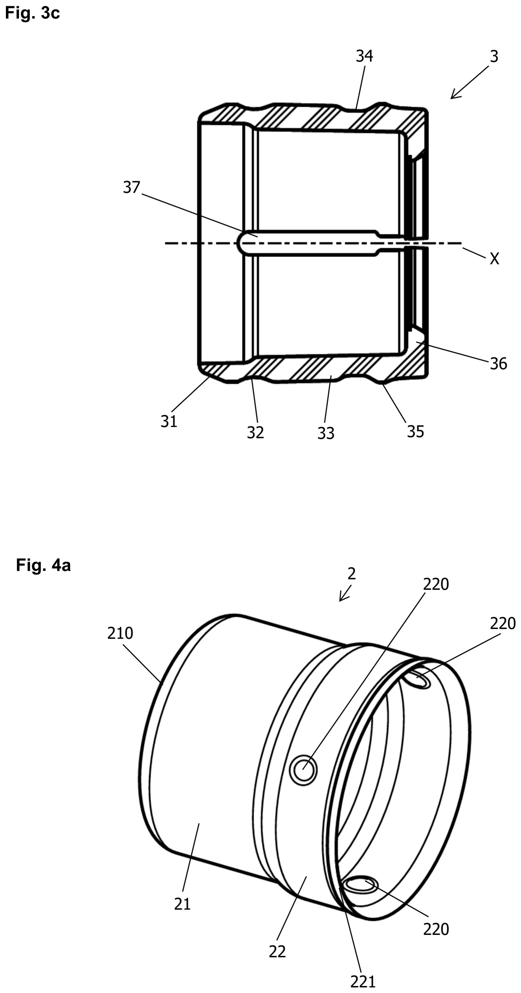

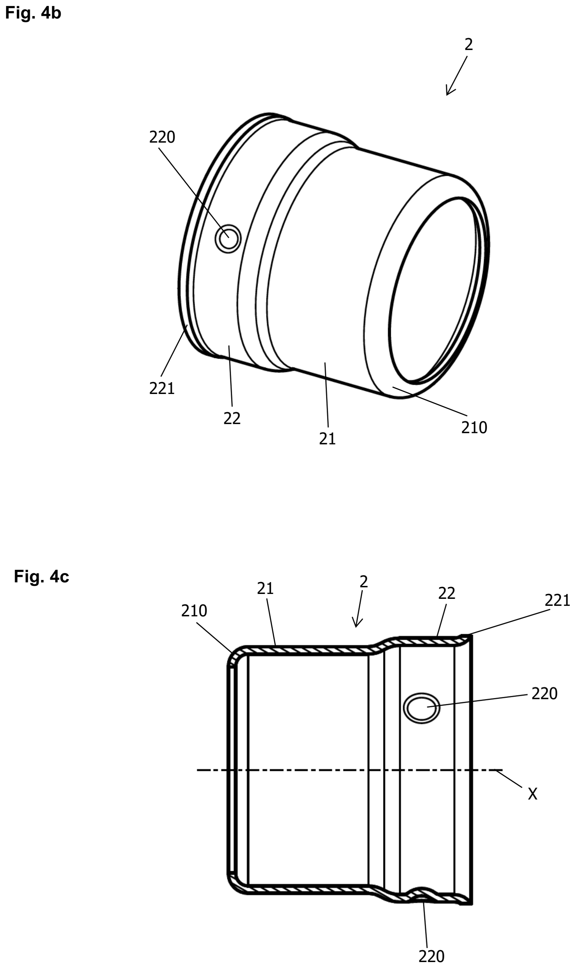

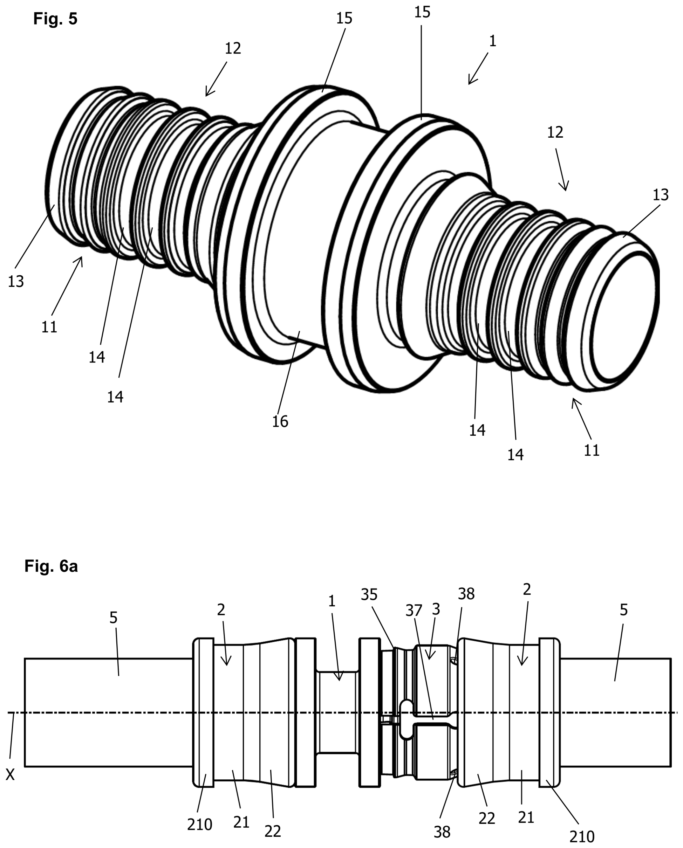

In den Figuren 1 und 2 ist eine Ausführungsform eines erfindungsgemäßen Sets in schematischen Prinzipdarstellungen vereinfacht dargestellt. In Figur 1 ist das Set in einer perspektivischen Darstellung gezeigt, in Figur 2 in einer Schnittdarstellung. Die Schnittdarstellung gemäß Figur 2 entspricht einem Schnitt in einer Schnittebene, in der die Achse X liegt, entlang der sich die Bestandteile des Sets erstrecken. Die Richtung, entlang derer die Achse X verläuft, wird vorliegend auch mit Längsrichtung bezeichnet. Der Schnitt gemäß Figur 2 verläuft mittig durch das Set. Das Set umfasst eine Ausführungsform eines erfindungsgemäßen Axialpressfittings 100 und zwei Leitungsrohre **5.** Das Axialpressfitting 100 umfasst einen Rohrstutzen 1, der zwei Rohrstutzenabschnitte aufweist, wobei im vorliegenden Ausführungsbeispiel und erfindungsgemäß allgemein vorteilhaft jeder der Rohrstutzenabschnitte jeweils die Hälfte der Längserstreckungslänge des Rohrstutzens 1 ausbildet und wobei im vorliegenden Ausführungsbeispiel und erfindungsgemäß allgemein vorteilhaft die beiden Rohrstutzenabschnitte identisch ausgebildet sind. Jeder der Rohrstutzenabschnitte des Rohrstutzens 1 weist jeweils einen Flanschabschnitt 15 und einen sich davon axial weg erstreckenden Rohrabschnitt auf, der das von dem jeweiligen Rohrstutzenabschnitt ausgebildete axiale Ende des Rohrstutzens 1 ausbildet, auf das jeweils eines der dargestellten Leitungsrohre 5 entlang der Achse X aufsteckbar ist. Das Axialpressfitting 100 weist zwei Außenhülsen 2, zwei Innenhülsen 3 und vier Dichtringe 4 auf, die vorliegend als O-Ringe ausgebildet sind. Die Außenhülsen 2 des in den Figuren 1 und 2 dargestellten Ausführungsbeispiels sind identisch ausgebildet und in Figur 4 umfassend die Figuren 4a, 4b und 4c detaillierter dargestellt. Die Innenhülsen 3 sind identisch ausgebildet und in Figur 3 umfassend die Figuren 3a, 3b und 3c detaillierter dargestellt. Der Rohrstutzen 1 ist in Figur 5 detaillierter dargestellt. Die Figuren 1 bis 5 werden zur Erläuterung des in den Figuren 1 und 2 dargestellten Ausführungsbeispiels nachfolgend gemeinsam beschrieben.

Jeder Rohrstutzenabschnitt des Rohrstutzens 1 bildet mit jeweils einer Außenhülse 2, einer Innenhülse 3 und zwei Dichtringen 4 einen Teil des Axialpressfittings 100 aus, das zur abdichtenden Verbindung mit jeweils einem Leitungsrohr 5 ausgebildet ist. In Ausführungsbeispielen, in denen der Rohrstutzen 1 nur einen solchen Rohrstutzenabschnitt umfasst, an seiner axial gegenüberliegenden Seite hingegen eine andere Anschlussseite aufweist, wie beispielsweise ein Gewinde, kann der Rohrstutzen 1 mit einer entsprechend ausgebildeten Außenhülse 2, einer entsprechend ausgebildeten Innenhülse 3 und entsprechend ausgebildeten Dichtringen 4 ein Axialpressfitting ausbilden, das zum abdichtenden Verbinden mit einem Leitungsrohr 5 geeignet ist, wohingegen er mit seiner anderen Anschlussseite, beispielsweise mit einem an dieser Anschlussseite vorgesehen Gewinde, an ein weiteres Bauteil eines Rohrleitungssystems angeschlossen werden kann, beispielsweise an eine Wandscheibe. Zur Erläuterung der vorliegend beschriebenen Erfindung sind die beiden erläuterten Teile des Axialpressfittings 100 in einer jeweils anderen Anordnung ihrer Bestandteile dargestellt. Die Bestandteile des linken Teils des Axialpressfittings 100 sind in ihrer Ausgangsanordnung dargestellt. Die Bestandteile des rechten Teils des Axialpressfittings 100 sind in ihrer Montageanordnung dargestellt. Die Bestandteile des jeweiligen Teils des Axialpressfittings 100 sind einerseits der jeweilige Rohrstutzenabschnitt, andererseits die jeweils zugeordnete Außenhülse 2, Innenhülse 3 und Dichtringe **4.** Ausgehend von der Ausgangsanordnung können die Bestandteile in die Montageanordnung übergeführt werden, indem die Außenhülse 2 relativ zu der Innenhülse 3 und relativ zum jeweiligen Rohrstutzenabschnitt bzw. Rohrstutzen 1 axial verschoben wird, bis die Bestandteile in der Montageanordnung zueinander angeordnet sind. Während die Außenhülse 2 relativ zur Innenhülse 3 verschoben wird, bleibt die Innenhülse 3 in einer unveränderten axialen Position relativ zum Rohrstutzen 1 bzw. Rohrstutzenabschnitt und zu den Dichtringen 4, was erfindungsgemäß allgemein vorteilhaft ist.

Aus Figur 1 ist bereits ein wesentlicher Vorteil von gattungsgemäßen Axialpressfittings zu erkennen. Ein Installateur kann bei einer auch nur flüchtigen Betrachtung des Axialpressfittings 100 unmittelbar feststellen, dass der rechte Teil des Axialpressfittings 100 bereits abdichtend mit dem zugeordneten Leitungsrohr 5 verbunden ist, wohingegen eine solche abdichtende Verbindung mit dem zugeordneten Leitungsrohr 5 bei dem linken Teil des Axialpressfittings 100 nicht vorliegt, da die Innenhülse 3 noch mit einem überwiegenden Teil ihrer Längserstreckungslänge zu sehen ist und somit nicht von der Außenhülse 2 verdeckt ist, woraus der Installateur direkt erkennen kann, dass sich die Bestandteile des linken Teils des Axialpressfittings 100 noch in ihrer Ausgangsanordnung befinden, in der keine abdichtende Verbindung zwischen Leitungsrohr 5 und Rohrstutzen 1 bzw. zugeordnetem Rohrstutzenabschnitt bereitgestellt sein kann.

Aus Figur 2 ist zu erkennen, dass durch das Verschieben der Außenhülse 2 relativ zur Innenhülse 3 entlang der Achse X ausgehend von der in der linken Seite dargestellten Ausgangsanordnung bis zum Erreichen der in der rechten Seite dargestellten Montageanordnung eine radiale Verpressung der Innenhülse 3 und hierdurch auch des Rohrs 5 gegenüber dem Rohrstutzen 1 bzw. zugeordneten Rohrstutzenabschnitt erfolgt. In der Montageanordnung ist die Innenhülse 3 mit ihrer Innenseite gegen die Außenseite des Leitungsrohrs 5 gepresst und ist das Leitungsrohr 5 gegen die Dichtringe 4 und die Außenseite des Rohrstutzens 1 bzw. des zugeordneten Rohrstutzenabschnitts gepresst. Darüber hinaus ist zu erkennen, dass in der Ausgangsanordnung die Außenhülse 2 mit ihrer radialen Halteanordnung 220 an einem korrespondierenden Halteabschnitt 32 der zugeordneten Innenhülse 3 gehalten ist, vorliegend verrastet ist, und in der Montageanordnung mit ihrer radialen Halteanordnung 220, die gleichzeitig die Fixieranordnung der Außenhülse 2 ausbildet, an einem Fixierabschnitt 35 der Innenhülse 3 gehalten ist, vorliegend mit diesem verrastet ist. Darüber hinaus ist zu erkennen, dass die Innenhülse sowohl in der Ausgangsanordnung als auch in der Montageanordnung mit einem zum Flanschabschnitt gewandten Endabschnitt mit dem Rohrstutzen 1 verrastet ist, wobei vorliegend und erfindungsgemäß allgemein vorteilhaft die Innenhülse 3 in diesem Endabschnitt eine radial nach innen ragende Vorsprungsanordnung 36 aufweist. Darüber hinaus ist zu erkennen, dass die Außenhülsen 2 an ihren in der Ausgangsanordnung zur Aufnahme des Leitungsrohrs 5 ausgebildeten Ende einen radial nach innen verlaufenden Endabschnitt 210 aufweisen, der im dargestellten Installationszustand des Sets bzw. des Axialpressfittings 100 zu einer Außenseite des zugeordneten Leitungsrohrs 5 weist. Hierdurch ist ein möglichst kantenfreier Übergang zwischen Leitungsrohr 5 und Axialpressfitting 100 in der Montageanordnung der Bestandteile des Axialpressfittings 100 gewährleistet, was beispielsweise das Aufschieben eine Isolierhülse bzw. eines Isolierschlauchs auf das Leitungsrohr 5 über zumindest einen Teil des Axialpressfittings 100 hinweg besonders einfach zerstörungsfrei gestalten lässt. Ferner weisen die Außenhülsen zwei an ihren jeweiligen, dem zugeordneten Flanschabschnitt 15 am nächsten liegenden axialen Ende einen radial nach außen verlaufenden Endabschnitt 221 auf. Darüber hinaus ist ersichtlich, dass die Innenhülsen 3 jeweils einen Anpressabschnitt 33 aufweisen, der in der Montageanordnung der Bestandteile sich über einen axialen Bereich hinweg erstreckt, in dem die zugeordneten Dichtringe 4 angeordnet sind, sodass auf axialer Höhe der Dichtringe 4 durch den Anpressabschnitt 33 eine besonders wirkungsvolle Verpressung des Leitungsrohrs 5 durch die Innenhülse 3 gegen die Dichtringe 4 und den Rohrstutzen 1 bzw. zugeordneten Rohrstutzenabschnitt gewährleistet ist.

Weitere Details von Bestandteilen des in den Figuren 1 und 2 gezeigten Sets bzw. Axialpressfittings sind aus den Figuren 3 bis 5 in Zusammenschau mit den Figuren 1 und 2 ersichtlich. Aus Figur 3 umfassend die Figuren 3a, 3b und 3c sind Details der Gestaltung der Innenhülsen 3 ersichtlich. Die jeweilige Innenhülse 3 weist in einem axialen Endabschnitt eine radial nach innen ragende Vorsprungsanordnung 36 auf und in dem axial gegenüberliegenden Endabschnitt eine Schrägfläche 31 auf. Die Schrägfläche 31 verläuft schräg zur Achse X und schräg zur Radialrichtung, die senkrecht auf der Achse X steht, und gewährleistet ein einfaches Verschieben der Außenhülse 2 relativ zur Innenhülse 3 ausgehend von der Ausgangsanordnung zum Erreichen der Montageanordnung, insbesondere ein einfaches Aufschieben eines ersten axialen Außenhülsenabschnitts 21 der Außenhülse 2, der einen geringeren Durchmesser aufweist als ein zweiter axialer Außenhülsenabschnitt 22 der Außenhülse 2. Bei der Angabe des Durchmessers einer Hülse bzw. eines Rohrs ist allgemein bevorzugt auf den inneren Durchmesser der Hülse bzw. des Rohrs abgestellt. Aus Figur 3 ist ferner ersichtlich, dass die Innenhülse 3 mehrere umfänglich voneinander beabstandete axiale Schlitze 37 aufweist, die sich bis zu einem axialen Ende der Innenhülse 3 erstrecken, was erfindungsgemäß allgemein vorteilhaft ist. Durch das Vorsehen der Schlitze 37 ist die Innenhülse 3 besonders gut durch die Außenhülse 2 radial komprimierbar. Die axialen Schlitze 37 erstrecken sich, erfindungsgemäß allgemein vorteilhaft, bis hin zu dem axialen Ende der Innenhülse 3, das durch den Endabschnitt gebildet ist, an dem die Vorsprungsanordnung 36 vorgesehen ist, mit der die Innenhülse 3 sowohl in der Montageanordnung als auch in der Ausgangsanordnung am Rohrstutzen 1 gehalten ist. Aus Figur 3 ist ferner ersichtlich, dass der Halteabschnitt 32 als um die Achse X umlaufende Nut ausgebildet ist und der Fixierabschnitt 35 als um die Achse X umlaufender radialer Vorsprung ausgebildet ist. Ferner ist ersichtlich, dass die Innenhülse 3 einen Anpressabschnitt 33 aufweist, an den axial unmittelbar angrenzend jeweils ein weiterer axialer Abschnitt 32, 34 (der Halteabschnitt 32 ist durch einen der axial an den Anpressabschnitt 33 angrenzenden Abschnitte ausgebildet) der Innenhülse 3 vorgesehen ist, innerhalb dessen die Innenhülse 3 jeweils eine geringere Wandstärke aufweist als in dem Anpressabschnitt 33. Bei einem Verpressen der Innenhülse 3 durch die Außenhülse 2 ausgehend von der Ausgangsanordnung bis zum Erreichen der Montageanordnung wird der Anpressabschnitt 33 unter axialer Verbreiterung verpresst, wobei er axial zu den an ihn unmittelbar angrenzenden Abschnitten 32, 34 ausweichen kann.

Aus Figur 4 ist erkennbar, dass die Außenhülse 2 über ihre gesamte Längserstreckungslänge hinweg eine im Wesentlichen konstante Wandstärke aufweist und einen ersten Außenhülsenabschnitt 21 aufweist, in dem sie einen geringeren Durchmesser aufweist als in ihrem zweiten axialen Außenhülsenabschnitt 22. Der erste Außenhülsenabschnitt 21 und der zweite Außenhülsenabschnitt 22 sind durch einen stufenartigen Verbindungsabschnitt miteinander verbunden. Aus der Zusammenschau der Figuren 4 und 2 ist ersichtlich, dass auf die Außenhülse 2 ausgehend von der im linken Teil von Figur 2 dargestellten Ausgangsanordnung eine axiale Presskraft aufzubringen ist, damit sie relativ zur Innenhülse 3 verschoben werden kann und hierdurch die in der rechten Seite von Figur 2 dargestellte Montageanordnung erreicht werden kann, wobei während des Verschiebens der erste Außenhülsenabschnitt 21 an dem Anpressabschnitt 33 der Innenhülse 3 entlanggeschoben wird, wodurch die Innenhülse 3 auf Höhe der Dichtringe 4 radial verpresst wird und hierdurch eine radiale Presskraft zwischen Leitungsrohr 5, Dichtringen 4 und Rohrstutzen 1 erzeugt. Während in der Ausgangsanordnung die Außenhülse 2 lediglich mit dem ersten Außenhülsenabschnitt und dem Verbindungsabschnitt mit der Innenhülse 3 überlappt, überlappt in der Montageanordnung die Außenhülse 2 sowohl mit dem ersten Außenhülsenabschnitt 21 als auch mit dem zweiten Außenhülsenabschnitt 22 axial mit der Innenhülse **3.** Die Halteanordnung 220 der Außenhülse 2 ist vorliegend durch mehrere, an der radialen Innenseite der Außenhülse 3 vorgesehene, radial nach innen ragende Haltevorsprünge ausgebildet, die um die Achse X gleichmäßig verteilt angeordnet und entlang eines Umlaufs um die Achse X voneinander beabstandet sind.

Aus Figur 5 ist zu erkennen, dass der Rohrstutzen 1 in jedem seiner Rohrstutzenabschnitte jeweils zwei Aufnahmen 14 aufweist, wobei jede der Aufnahmen 14 zur Aufnahme von jeweils einem Dichtring 4 ausgebildet ist und zwei Aufnahmewände aufweist, zwischen denen der Dichtring 4 sowohl in der Montageanordnung als auch in der Ausgangsanordnung angeordnet ist, siehe Figur **2****.** Dabei weisen die Aufnahmewände eine solche radiale Erstreckungslänge auf bzw. weist die Aufnahme eine solche radiale Erstreckungslänge auf, dass die radiale Außenseite der Aufnahmewände radial über die Außenseite des Dichtrings vorsteht. Zum Realisieren des Installationszustands, in dem das Leitungsrohr 5 in dem Aufnahmeraum angeordnet ist und sich die Bestandteile des Axialpressfittings 100 in der Montageanordnung befinden, greift das Leitungsrohr 5 mit jeweils einem radialen Abschnitt in jede der Aufnahmen 14 ein. Aus Figur 5 ist zu erkennen, dass der Rohrstutzen 1 zwei Rohrstutzenabschnitte aufweist, die jeweils einen Flanschabschnitt 15 aufweisen, wobei die Flanschabschnitte 15 durch einen Verbindungsteil des Rohrstutzens 1 miteinander verbunden sind. Von dem jeweiligen Flanschabschnitt 15 erstreckt sich jeweils ein Stutzenabschnitt 12 axial weg, der zum Einführen in ein Leitungsrohr 5 ausgebildet ist, was erfindungsgemäß allgemein vorteilhaft ist. Erfindungsgemäß allgemein vorteilhaft weist der Stutzenabschnitt 12 an seinem jeweiligen von dem Flanschabschnitt 15 weg weisenden axialen Ende eine Schrägfläche 13 auf, um das Einführen in ein Leitungsrohr 5 zu vereinfachen, was erfindungsgemäß allgemein vorteilhaft ist. Axial an die Schrägfläche 13 schließt sich, erfindungsgemäß allgemein vorteilhaft, ein Rippenabschnitt 11 an, in dem mehrere axial hintereinander angeordnete Rippen vorgesehen sind, die zum verkrallen mit einer Innenseite des Leitungsrohrs 5 ausgebildet sind, was erfindungsgemäß allgemein vorteilhaft ist. An den Rippenabschnitt 11 schließt sich axial zum Flanschabschnitt 15 hin zumindest eine Aufnahme 14 an, was erfindungsgemäß allgemein vorteilhaft ist, wobei die Aufnahmewände der Aufnahme 14 durch jeweils eine Rippe des Rohrstutzens 1 gebildet ist, was erfindungsgemäß allgemein vorteilhaft ist.

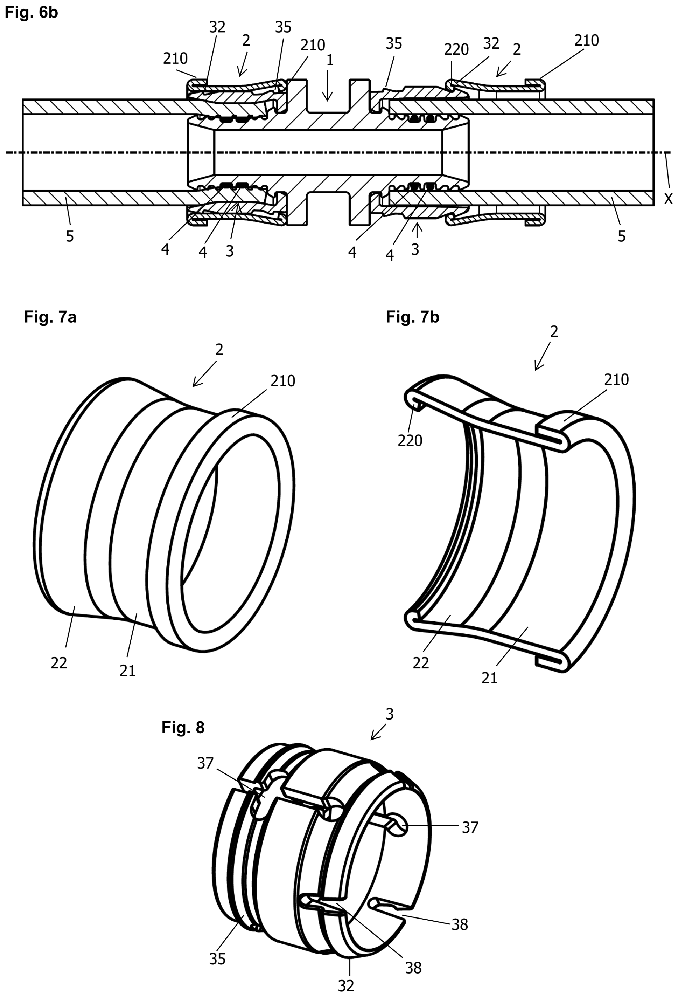

In Figur 6 umfassend die Figuren 6a und 6b, Figur 7 umfassend die Figuren 7a und 7b und Figur 8 ist eine weitere Ausführungsform eines erfindungsgemäßen Sets umfassend ein erfindungsgemäßes Axialpressfitting in verschiedenen schematischen Prinzipdarstellungen dargestellt. Figur 6a zeigt eine Draufsicht auf das Set und Figur 6b zeigt eine Schnittansicht, sodass die Bestandteile des Sets dieser Ausführungsform analog zu den Figuren 1 und 2 der darin gezeigten Ausführungsform zu erkennen sind. In Figur 7a ist eine perspektivische Ansicht der Innenhülse 3 des Sets dargestellt, in Figur 7b eine Schnittansicht dieser perspektivischen Darstellung. In Figur 8 ist die Innenhülse 3 gezeigt. Die Außenhülse 2 der in den Figuren 6 bis 8 gezeigten Ausführungsform ist aus einem Metallblech mittels Tiefziehens hergestellt, alternativ könnte eine Außenhülse 2 mittels mechanischer Bearbeitung eines Rohrs bzw. Rohrabschnitts hergestellt sein. Die Außenhülse 2 weist einen ersten axialen Außenhülsenabschnitt 21 auf, der zylindrisch ausgebildet ist, und einen zweiten Außenhülsenabschnitt 22, der konisch ausgebildet ist. In dem zweiten Außenhülsenabschnitt 22 weist die Außenhülse 2 einen größeren Durchmesser auf als in dem ersten Außenhülsenabschnitt 21. Die Außenhülse 2 ist hergestellt, indem zunächst mittels Tiefziehens eines Blechs eine Hülse hergestellt wird und anschließend die beiden Längsenden bzw. axialen Enden der Hülse umgebogen werden. An ihrem ersten Längsende weist entsprechend die Außenhülse 2 eine radial nach innen gewandte Kante auf, die durch ein nach innen umgebogenes Ende der Außenhülse 2 gebildet ist. Diese Kante bildet die Halteanordnung 220 und die Fixieranordnung der Außenhülse 2 aus, wobei sich im vorliegenden Ausführungsbeispiel Fixieranordnung und Halteanordnung entsprechen. An ihrem zweiten axialen Ende ist die Außenhülse 2 ebenfalls umgebogen unter Ausbildung eines umgebogenen Endabschnitts 210, der radial außerhalb eines Erstreckungsabschnitts der Außenhülse 2 verläuft, die sich über einen selben axialen Abschnitt wie der umgebogene Endabschnitt 210 erstreckt und der eine Innenseite der Außenhülse 2 ausbildet. Dies ist erfindungsgemäß allgemein vorteilhaft. In der Ausgangsanordnung, die anhand der rechten Seite der in den Figuren 6a und 6b gezeigten Darstellung erläutert ist, hintergreift die Fixieranordnung bzw. Halteanordnung 220 bzw. die radial nach innen gewandte Kante den Halteabschnitt 32 der Innenhülse 3, und in der Montageanordnung, die anhand der linken Seite der Darstellungen der Figuren 6a und 6b erläutert ist, hintergreift die Fixieranordnung bzw. nach innen gewandte Kante den Fixierabschnitt 35 der Innenhülse 3. Da die Kante eine scharfe, eckige Kante ist, ist eine Fixierung der Außenhülse 2 an der Innenhülse 3 sowohl in der Montageanordnung als auch in der Ausgangsanordnung zuverlässig gewährleistet. Die Innenhülse 3 weist eine erste Gruppe an Schlitzen 37 und eine zweite Gruppe an Schlitzen 38 auf, wobei die erste Gruppe an Schlitzen 37 zum ersten Längsende bzw. axialen Ende der Innenhülse 3 offen sind und von dem zweiten Längsende bzw. axialen Ende der Innenhülse 3 beabstandet sind, wohingegen die zweite Gruppe an Schlitzen 38 zum zweiten Längsende bzw. axialen Ende der Innenhülse offen sind und von dem ersten Längsende bzw. axialen Ende der Innenhülse 3 beabstandet sind.

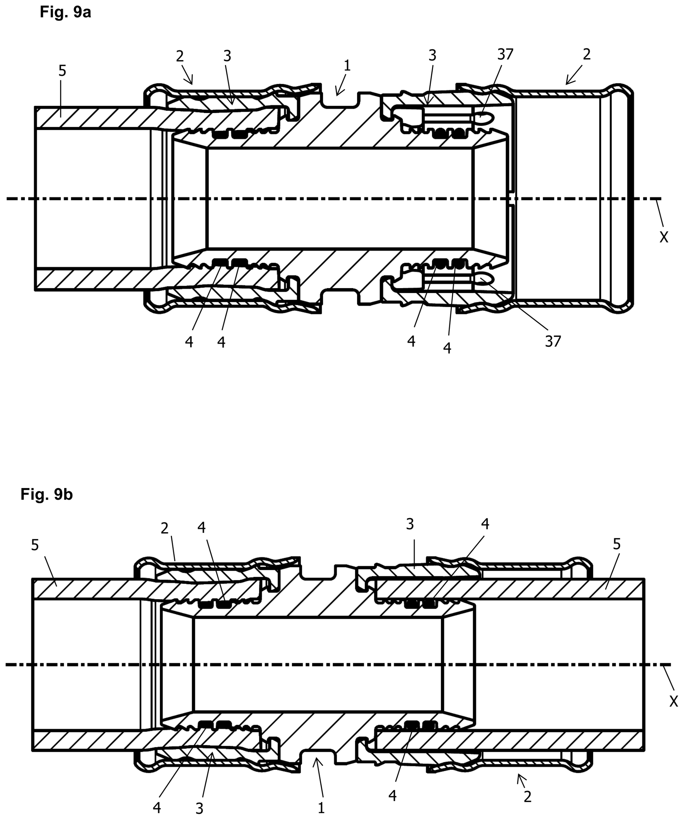

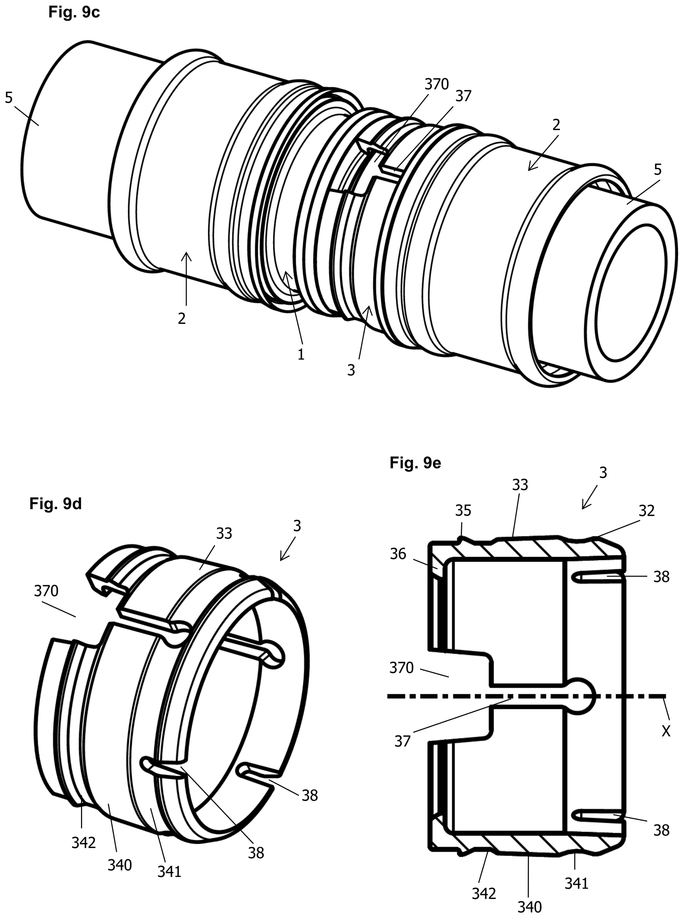

In Figur 9 umfassend die Figuren 9a, 9b, 9c, 9d und 9e ist eine weitere Ausführungsform eines erfindungsgemäßen Sets bzw. eines von diesem umfassten Axialpressfittings dargestellt. In den Figuren 9a und 9b sind Schnittansichten dargestellt, in Figur 9c ist eine perspektivische Ansicht auf das Set analog zu der Schnittdarstellung gemäß Figur 9b dargestellt, in Figur 9d ist eine perspektivische Ansicht auf die Innenhülse 3 dargestellt und in Figur 9e ist eine Schnittansicht auf die Innenhülse 3 dargestellt. Bei der Darstellung gemäß Figur 9a ist auf der linken Seite die Montageanordnung illustriert, auf der rechten Seite die Ausgangsanordnung des Axialpressfittings mit dem Aufnahmeraum, der zur Aufnahme eines Leitungsrohrs 5 ausgebildet ist. Die Darstellung gemäß Figur 9b unterscheidet sich von der Darstellung gemäß Figur 9a lediglich dadurch, dass bei der Darstellung gemäß Figur 9b das Leitungsrohr 5 in dem Aufnahmeraum angeordnet ist. Aus der Zusammenschau der Figuren 9a bis 9e ist ersichtlich, dass die Innenhülse 3 ein Sichtfenster 370 aufweist, das durch eine Verbreiterung von jeweils einem Schlitz 37 der ersten Gruppe an Schlitzen 37 ausgebildet ist. Aus der Zusammenschau dieser Figuren ist ferner ersichtlich, dass die Innenhülse 3 einen axialen Erstreckungsabschnitt 340 aufweist, der einen sich entlang der Achse X entgegen der Verschieberichtung vergrößernden Außendurchmesser aufweist. Innerhalb dieses axialen Erstreckungsabschnitts 340 ist die Innenhülse 3 somit mit ihrer Außenseite konisch ausgebildet. An den beiden axialen Enden das axialen Erstreckungsabschnitts 340 ist jeweils eine Einschnürung 341, 342 vorgesehen. Aufgrund der Einschnürungen 341, 342 ist der axiale Erstreckungsabschnitt 340 besonders gut radial verpressbar, und aufgrund seiner konischen Ausgestaltung wirkt er im verpressten Zustand, d. h. in der Montageanordnung, einem Lösen der Außenhülse 2 vor der Innenhülse 3 entgegen. Der axiale Erstreckungsabschnitt 340 bildet im vorliegenden Ausführungsbeispiel den Anpressabschnitt 33 der Innenhülse 3 aus. Aus Figur 9 ist ferner ersichtlich, dass die Außenhülse 2 eine Fixieranordnung aufweist, die durch eine um die Achse X umlaufende Sicke ausgebildet ist, durch die ein um die Achse X umlaufender Vorsprung gebildet ist, der in der Montageanordnung den Fixierabschnitt 35 der Innenhülse 3 hintergreift. Somit ist in der Montageanordnung die Außenhülse 2 relativ zur Innenhülse 3 besonders gut gesichert, da sowohl die Fixieranordnung mit dem Fixierabschnitt 35 zusammenwirkt als auch der axiale Erstreckungsabschnitt 340 zwar in der Ausgangsanordnung konisch verläuft, jedoch in der Montageanordnung so verpresst ist, dass seine Außenseite zylindrisch ist, wie dies insbesondere aus den Figuren 9a und 9b zu erkennen ist und was durch das Verpressen der Innenhülse 3 durch die Außenhülse 2 realisiert ist.

### Bezugszeichenliste

- 1: Rohrstutzen
- 2: Außenhülse
- 3: Innenhülse
- 4: Dichtring
- 5: Leitungsrohr
- 11: Rippenabschnitt
- 12: Stutzenabschnitt
- 13: Schrägfläche
- 14: Aufnahme
- 15: Flanschabschnitt
- 21: Außenhülsenabschnitt
- 22: Außenhülsenabschnitt
- 31: Schrägfläche
- 32: Halteabschnitt
- 33: Anpressabschnitt
- 34: angrenzender Abschnitt
- 35: Fixierabschnitt
- 36: Vorsprungsanordnung
- 37: Schlitz
- 38: Schlitz
- 100: Axialpressfitting
- 210: Endabschnitt
- 220: Halteanordnung
- 221: Endabschnitt
- 340: Erstreckungsabschnitt
- 341: Einschnürung
- 342: Einschnürung
- 370: Sichtfenster
- X: Achse

## Patentansprüche

1. Axialpressfitting (100) zum abdichtenden Verbinden mit einem Leitungsrohr (5) eines Rohrleitungssystems, wobei das Axialpressfitting (100) als Bestandteile einen Rohrstutzen (1), eine Innenhülse (3) und eine Außenhülse (2) umfasst, die sich jeweils entlang einer Achse (X) axial erstrecken, wobei insbesondere die Außenhülse (2) und/oder der Rohrstutzen (1) aus Metall hergestellt sind, wobei in einer Ausgangsanordnung der Bestandteile zueinander die Innenhülse (3) radial innerhalb der Außenhülse (2) angeordnet ist und der Rohrstutzen (1) radial innerhalb der Innenhülse (3) angeordnet ist und zwischen Rohrstutzen (1) und Innenhülse (3) ein Aufnahmeraum zur Aufnahme des Leitungsrohrs (5) angeordnet ist, wobei ausgehend von der Ausgangsanordnung die Außenhülse (2) in einer axialen Verschieberichtung relativ zu der Innenhülse (3) verschiebbar ist bis zum Erreichen einer Montageanordnung der Bestandteile zueinander unter Verformung der Innenhülse (3) zum Verkleinern einer radialen Erstreckung von zumindest einem axialen Abschnitt des Aufnahmeraums zum Gewährleisten einer radialen Verpressung des Leitungsrohrs (5),
**dadurch gekennzeichnet, dass**
die Außenhülse (2) zumindest teilweise aus einem Blech, insbesondere Metallblech, hergestellt ist, insbesondere mittels Tiefziehens, und/oder mittels Bearbeitung eines Rohrs hergestellt ist, wobei insbesondere die Außenhülse (4) mehrere Teile aufweist, insbesondere einen ersten Teil aus Metall und einen zweiten Teil aus Kunststoff..

2. Axialpressfitting (100) nach Anspruch 1,
**dadurch gekennzeichnet, dass**
die Außenhülse (2) an ihrer radialen Innenseite eine radiale Fixieranordnung aufweist, die in der Montageanordnung mit einem zu ihr korrespondierenden, an der radialen Außenseite der Innenhülse oder des Rohrstutzens (1) vorgesehenen Fixierabschnitt (35) fixiert, insbesondere verklemmt oder verrastet, ist, wobei insbesondere die Fixieranordnung durch mechanische Bearbeitung eines von der Außenhülse (4) umfassten Teils hergestellt ist, wobei insbesondere die Außenhülse (2) an ihrer radialen Innenseite eine radiale Halteanordnung (220) aufweist, die in der Ausgangsanordnung mit einem zu ihr korrespondierenden, an der radialen Außenseite der Innenhülse (3) vorgesehenen Halteabschnitt (32) fixiert, insbesondere verklemmt oder verrastet, ist, wobei insbesondere die Fixieranordnung der Außenhülse (2) durch ihre Halteanordnung (220) ausgebildet ist, wobei insbesondere der Halteabschnitt (32) und der Fixierabschnitt (35) durch die Innenhülse (3) ausgebildet sind und axial voneinander beabstandet sind.

3. Axialpressfitting nach Anspruch 2,
**dadurch gekennzeichnet, dass**
die Fixieranordnung eine radial nach innen gewandte Kante aufweist, die insbesondere durch ein freies Ende einer aus dem Blech bzw. Rohr gestanzten, radial nach innen ausgestellten Ausstelllasche oder ein radial nach innen umgebogenes Ende der Außenhülse gebildet ist.

4. Axialpressfitting (100) nach einem der Ansprüche 2 oder 3,
**dadurch gekennzeichnet, dass**
die Halteanordnung (220) oder die Fixieranordnung um die Achse (X) umlaufend ausgebildet ist und/oder mindestens einen radial nach innen ragenden Vorsprung und/oder mindestens eine sich radial nach außen erstreckende Ausnehmung umfasst, insbesondere mehrere Vorsprünge und/oder Ausnehmungen, die um die Achse (X) verteilt angeordnet und entlang eines Umlaufs um die Achse (X) voneinander beabstandet sind, wobei insbesondere die Fixieranordnung sich über eine größere Umlauflänge um die Achse (X) erstreckt als der Fixierabschnitt und insbesondere der Halteabschnitt und/oder die Halteanordnung (200) sich über eine größere Umlauflänge um die Achse (X) erstreckt als der Fixierabschnitt und insbesondere der Halteabschnitt.

5. Axialpressfitting (100) nach einem der vorangehenden Ansprüche,
**dadurch gekennzeichnet, dass**
die Außenhülse (2) eine Wandstärke aufweist, die über zumindest 80 %, insbesondere über mindestens 90 %, insbesondere über 100 %, ihrer Längserstreckungslänge hinweg um weniger als 20 %, insbesondere um weniger als 10 %, insbesondere um weniger als 5 % variiert, wobei die Wandstärke weniger als 2 mm, insbesondere weniger als 1,8 mm, insbesondere weniger als 1,5 mm, insbesondere maximal 1,3 mm beträgt.

6. Axialpressfitting (100) nach einem der vorangehenden Ansprüche,
**dadurch gekennzeichnet, dass**
die Außenhülse (2) an ihrem in der Ausgangsanordnung zur Aufnahme des Leitungsrohrs (5) ausgebildeten Ende einen radial umgebogenen Endabschnitt (210) aufweist.

7. Axialpressfitting nach einem der vorangehenden Ansprüche,
**dadurch gekennzeichnet, dass**
die Innenhülse (3) als zwei entlang der Achse (X) voneinander abgewandte Längsenden ein erstes und ein zweites Längsende aufweist, wobei die Innenhülse (3) eine Gruppe an ersten Schlitzen (37) aufweist, die zum ersten Längsende offen sind und von dem zweiten Längsende beabstandet sind, sowie eine Gruppe an zweiten Schlitzen (38) aufweist, die zum zweiten Längsende offen sind und von dem ersten Längsende beabstandet sind.

8. Axialpressfitting nach einem der vorangehenden Ansprüche
**dadurch gekennzeichnet, dass**
zumindest entweder eine Außenseite der Innenhülse (3) oder eine Innenseite der Außenhülse (2) einen sich über einen axialen Erstreckungsabschnitt hinweg entlang der Achse (X) vergrößernden Durchmesser aufweist, insbesondere entlang der Achse (X) in Richtung entgegen der axialen Verschieberichtung vergrößernden Durchmesser aufweist, wobei insbesondere die Außenseite der Innenhülse (3) in der Ausgangsanordnung einen sich über den axialen Erstreckungsabschnitt entlang der Achse (X) vergrößernden Durchmesser aufweist, wobei in der Montageanordnung aufgrund einer erfolgten Verpressung der Innenhülse (3) durch die Außenhülse (2) die Außenseite der Innenhülse über den Erstreckungsabschnitt hinweg einen konstanten Durchmesser aufweist.

9. Axialpressfitting (100) nach Anspruch 8,
**dadurch gekennzeichnet, dass**
sich der axiale Erstreckungsabschnitt über mindestens 10 %, insbesondere mindestens 20 %, insbesondere mindestens 30 %, einer Gesamterstreckungslänge der Innenhülse entlang der Achse (X) erstreckt, wobei insbesondere an zumindest ein Ende des axialen Erstreckungsabschnitts sich ein zylindrischer Abschnitt der Innenhülse oder eine in der Außenseite vorgesehene Einschnürung anschließt.

10. Axialpressfitting (100) nach einem der vorangehenden Ansprüche,
**dadurch gekennzeichnet, dass**
der Rohrstutzen (1) einen Flanschabschnitt (15) aufweist, von dem die Außenhülse (2) in der Ausgangsanordnung axial weiter beabstandet ist als in der Montageanordnung, wobei die Innenhülse (3) an dem Rohrstutzen (1) mit einem zum Flanschabschnitt (15) gewandten Endabschnitt fixiert ist, wobei insbesondere die Innenhülse (3) in diesem Endabschnitt eine radial nach innen ragende Vorsprungsanordnung (36) aufweist.

11. Axialpressfitting (100) nach einem der vorangehenden Ansprüche,
**dadurch gekennzeichnet, dass**
die Außenhülse (2) einen ersten axialen Außenhülsenabschnitt (21) aufweist, in dem sie einen ersten Durchmesser aufweist, und einen zweiten axialen Außenhülsenabschnitt (22) aufweist, in dem sie einen zweiten Durchmesser aufweist, wobei der erste Durchmesser kleiner als der zweite Durchmesser ist und in der Ausgangsanordnung der erste axiale Außenhülsenabschnitt (21) axial versetzt zu der Innenhülse (3) angeordnet ist und der zweite Außenhülsenabschnitt (22) mit der Innenhülse (3) axial überlappend und diese radial umschließend angeordnet ist, wobei insbesondere die Außenhülse (2) einen axialen Verbindungsabschnitt aufweist, der den ersten Außenhülsenabschnitt (21) mit dem zweiten Außenhülsenabschnitt (22) verbindet und innerhalb dessen sich der Durchmesser der Außenhülse (2), insbesondere stufenartig, vom ersten Durchmesser zum zweiten Durchmesser verändert, wobei insbesondere der erste Außenhülsenabschnitt (21) und/oder der zweiten Außenhülsenabschnitt (22) eine Form nach Art eines Hohlzylinders aufweisen.

12. Axialpressfitting (100) nach Anspruch 11,
**dadurch gekennzeichnet, dass**
in der Ausgangsanordnung und in der Montageanordnung zwischen der Innenhülse (3) und dem Rohrstutzen (1) ein Dichtring (4) vorgesehen ist, wobei insbesondere eine axiale Relativposition des Dichtrings (4) zum Rohrstutzen (1) und/oder zur Innenhülse (3) in der Montageanordnung auf einen selben Positionsbereich festgelegt ist wie in der Ausgangsanordnung.

13. Axialpressfitting (100) nach Anspruch 12,
**dadurch gekennzeichnet, dass**
der Rohrstutzen (1) an seiner Außenseite zumindest eine, insbesondere mehrere, axial hintereinander angeordnete, die Achse (X) umlaufende Aufnahme (14) aufweist, wobei der Dichtring (4) in der Aufnahme (14) angeordnet ist, um in einem Installationszustand des Axialpressfittings (100), in dem die Bestandteile des Axialpressfittings (100) in der Montageanordnung angeordnet sind, zwischen Rohrstutzen (1) und Leitungsrohr (5) radial verpresst zu werden, wobei insbesondere ein erster Dichtring (4) in einer ersten Aufnahme (14) angeordnet ist, um in dem Installationszustand des Axialpressfittings (100) zwischen Rohrstutzen (1) und Leitungsrohr (5) radial verpresst zu werden, und ein Dichtring (4) in einer zweiten Aufnahme (14) angeordnet ist, um in dem Installationszustand des Axialpressfittings (100) zwischen Rohrstutzen (1) und Leitungsrohr (5) radial verpresst zu werden.

14. Axialpressfitting (100) nach Anspruch 13,
**dadurch gekennzeichnet, dass**
die Aufnahme (14) zwei axial voneinander beabstandete Aufnahmewände aufweist, zwischen denen der Dichtring (4) angeordnet ist, die jeweils eine radiale Außenseite aufweisen, wobei die Außenseiten von zumindest einer der Aufnahmewände radial auf gleicher Höhe wie eine radiale Außenseite des Dichtrings (4) verläuft oder über diese vorsteht, wobei insbesondere die Aufnahmewände durch jeweils eine um die Achse (X) umlaufende Rippe des Rohrstutzens (1) ausgebildet sind.

15. Axialpressfitting (100) nach einem der Ansprüche 11 bis 14,
**dadurch gekennzeichnet, dass**
die Außenhülse (2) und/oder Innenhülse (3) für jeden von dem Axialpressfitting (100) umfassten Dichtring (4) jeweils einen Anpressabschnitt (33) aufweist, wobei in der Montageanordnung der dem jeweiligen Dichtring (4) zugeordnete Anpressabschnitt (33) auf einer selben axialen Höhe wie der ihm jeweils zugeordnete Dichtring (4) angeordnet ist und zum radialen Verpressen des Dichtrings (4) mittels des Leitungsrohrs (5) ausgebildet ist, wobei insbesondere in einem Installationszustand des Axialpressfittings (100), in dem die Bestandteile des Axialpressfittings (100) in der Montageanordnung zueinander angeordnet sind und das Leitungsrohr (5) in dem Aufnahmeraum angeordnet und durch ein Zusammenwirken von Innenhülse (3) und Außenhülse (2) gegen den Rohrstutzen (1) verpresst sind, die verschiedenen Dichtringe (4) durch die ihnen jeweils zugeordneten Anpressabschnitte (33) unterschiedlich verpresst sind, und/oder wobei insbesondere in der Montageanordnung auf axialer Höhe von unterschiedlichen Dichtringen (4) ein jeweils anderer radialer Abstand zwischen der Innenhülse (3) bzw. dem dem jeweiligen Dichtring (4) zugeordneten Anpressabschnitt (33) und dem Rohrstutzen (1) vorgesehen ist.

16. Set umfassend ein Axialpressfitting (100) nach einem der vorangehenden Ansprüche und ein Leitungsrohr (5), wobei in einem Installationszustand des Sets die Bestandteile des Axialpressfittings (100) in der Montageanordnung angeordnet sind und das Leitungsrohr (5) in dem Aufnahmeraum angeordnet ist und durch ein Zusammenwirken von Innenhülse (3), Außenhülse (2) und Rohrstutzen (1) zwischen Rohrstutzen (1) und Innenhülse (3) radial verpresst ist, wobei insbesondere das Leitungsrohr (5) beschichtet ist und/oder ohne vorherige Aufweitung radial mit dem Axialpressfitting (100) verpresst ist.

17. Verfahren zum abdichtenden Verbinden eines Leitungsrohrs (5) mit einem Axialpressfitting (100) nach einem der Ansprüche 1 bis 14, das als Bestandteile einen Rohrstutzen (1), eine Innenhülse (3) und eine Außenhülse (2) umfasst, die sich jeweils entlang einer Achse (X) axial erstrecken, wobei eine Ausgangsanordnung der Bestandteile des Axialpressfittings (100) zueinander realisiert wird, in der die Innenhülse (3) radial innerhalb der Außenhülse (2) angeordnet ist und der Rohrstutzen (1) radial innerhalb der Innenhülse (3) angeordnet ist und zwischen Rohrstutzen (1) und Innenhülse (3) ein Aufnahmeraum angeordnet ist, in dem das Leitungsrohr (5) den Rohrstutzen (1) aufnehmend angeordnet wird, wobei ausgehend von der Ausgangsanordnung die Außenhülse (2) in einer axialen Verschieberichtung relativ zu der Innenhülse (3) verschoben wird bis zum Erreichen einer Montageanordnung der Bestandteile des Axialpressfittings (100) zueinander unter Verformung der Innenhülse (3) zum Verkleinern einer radialen Erstreckung von zumindest einem axialen Abschnitt des Aufnahmeraums, wodurch das Leitungsrohr (5) radial verpresst wird, wobei insbesondere das Leitungsrohr (5) in dem Aufnahmeraum angeordnet wird, ohne zuvor aufgeweitet worden zu sein, wobei insbesondere zwischen der Innenhülse (3) und dem Rohrstutzen (1) ein Dichtring (4) vorgesehen ist und das Leitungsrohr (5) radial gegen den Dichtring (4) gepresst wird.
